# EUROPEAN PATENT APPLICATION

(11) **EP 4 503 668 A1**
(43) Date of publication of application: **05.02.2025**
(21) Application number: 23841850.3
(22) Date of filing: 27.04.2023
(51) Int. Cl.: H04W 4/24

(54) **MESSAGE TRANSMISSION METHOD AND RELATED DEVICE**

(30) Priority: 18.07.2022 CN 202210843002
(71) Applicant: Tencent Technology (Shenzhen) Company Limited, Shenzhen, Guangdong 518057 (CN)
(72) Inventor: ZHANG, Zhuoyun, Shenzhen, Guangdong 518057 (CN)
(74) Representative: EP&C
(86) International application number: PCT/CN2023/091295
(87) International publication number: WO 2024/016779

(57) **Abstract**

The embodiments of the present disclosure provide a message transmission method and a related device. The method is executed by an application function network element, and comprises: transmitting a first service quality request message to a policy control function network element, the first service quality request message comprising first connection identifier information and a first service quality parameter; the first service quality request message being used for instructing the policy control function network element to send, according to the first service quality request message, a first policy control billing rule to a first session management function network element, the first policy control billing rule comprising first connection identifier information and a first service quality parameter. The embodiments of the present application optimize network transmission, and reduce the number of interactions between an AF and the network.

## Description

### RELATED APPLICATION

This application claims priority to Chinese Patent Application No. 202210843002.1, filed with the China National Intellectual Property Administration on July 18, 2022 and entitled "MESSAGE TRANSMISSION METHOD AND RELATED DEVICES", which is incorporated herein by reference in its entirety.

### FIELD OF THE TECHNOLOGY

The present disclosure relates to the field of communication technologies, and specifically, to a message transmission method, a communication device, a computer-readable storage medium, and a computer program product.

### BACKGROUND OF THE DISCLOSURE

In related art, when the user equipment (UE) switches the Internet protocol (IP) address, the application function (AF) is required to re-initiate interaction with the network, which increases the quantity of times of interaction between the AF and the network.

### SUMMARY

Embodiments of the present disclosure provide a message transmission method, a communication device, a computer-readable storage medium, and a computer program product, which can optimize network transmission.

An embodiment of the present disclosure provides a message transmission method, performed by an AF, the method including:
transmitting a first quality of service (QoS) request message of a service flow, the first QoS request message including first connection identity (ID) information and a first QoS parameter; and
the first QoS request message being configured for instructing a policy control function (PCF) to transmit, according to the first QoS request message, a first policy control and charging (PCC) rule to a first session management function (SMF) corresponding to a first protocol data unit (PDU) session, the first PCC rule including the first connection ID information and the first QoS parameter.

An embodiment of the present disclosure provides a message transmission method, performed by a PCF, the method including:
acquiring a first quality of service (QoS) request message of a service flow, the first QoS request message including first connection identity (ID) information and a first QoS parameter;
determining a first protocol data unit (PDU) session and a first policy control and charging (PCC) rule according to the first QoS request message, the first PCC rule including the first connection ID information and the first QoS parameter; and
transmitting the first PCC rule to a first session management function (SMF) corresponding to the first PDU session,
the first PCC rule being configured for instructing the first SMF to transmit a first data packet detection rule and a corresponding first QoS execution rule to a user plane function (UPF), the first data packet detection rule including the first connection ID information.

An embodiment of the present disclosure provides a message transmission method, performed by a first SMF corresponding to a first PDU session, the method including:
receiving a first policy control and charging (PCC) rule from a policy control function (PCF), the first PCC rule including first connection identity (ID) information and a first quality of service (QoS) parameter;
acquiring a first data packet detection rule and a corresponding first QoS execution rule according to the first PCC rule, the first data packet detection rule including the first connection ID information; and
transmitting the first data packet detection rule and the corresponding first QoS execution rule to a user plane function (UPF),
the first data packet detection rule being configured for instructing the UPF to acquire, according to the first data packet detection rule, a data packet of a service flow, and execute the first QoS execution rule on the data packet.

An embodiment of the present disclosure provides a message transmission method, performed by a UPF, the method including:
receiving a first data packet detection rule and a corresponding first quality of service (QoS) execution rule from a first session management function (SMF) corresponding to a first protocol data unit (PDU) session, the first data packet detection rule including first connection identity (ID) information; and
acquiring a data packet of a service flow according to the first data packet detection rule, and executing the first QoS execution rule on the data packet, the data packet of the service flow including the first connection ID information.

An embodiment of the present disclosure provides a message transmission method, performed by an AF, the method including:
transmitting a first route request message of a service flow, the first route request message including third connection identity (ID) information and a first routing rule; and
the first route request message being configured for instructing a policy control function (PCF) to transmit, according to the first route request message, a third policy control and charging (PCC) rule to a second session management function (SMF) corresponding to a second protocol data unit (PDU) session, the third PCC rule including the third connection ID information and the first routing rule.

An embodiment of the present disclosure provides a message transmission method, performed by a PCF, the method including:
acquiring a first route request message of a service flow, the first route request message including third connection identity (ID) information and a first routing rule;
determining a second protocol data unit (PDU) session and a third policy control and charging (PCC) rule according to the first route request message, the third PCC rule including the third connection ID information and the first routing rule; and
transmitting the third PCC rule to a second session management function (SMF) corresponding to the second PDU session,
the third PCC rule being configured for instructing the second SMF to transmit a third data packet detection rule and a corresponding first offloading forwarding rule to a user plane function (UPF), the third data packet detection rule including the third connection ID information.

An embodiment of the present disclosure provides a message transmission method, performed by a second SMF corresponding to a second PDU session, the method including:
receiving a third policy control and charging (PCC) rule from a policy control function (PCF), the third PCC rule including third connection identity (ID) information and a first routing rule;
acquiring a third data packet detection rule and a corresponding first offloading forwarding rule according to the third PCC rule, the third data packet detection rule including the third connection ID information; and
transmitting the third data packet detection rule and the corresponding first offloading forwarding rule to a user plane function (UPF),
the third data packet detection rule being configured for instructing the UPF to acquire, according to the third data packet detection rule, a data packet of a service flow, and execute the first offloading forwarding rule on the data packet.

An embodiment of the present disclosure provides a message transmission method, performed by a UPF, the method including:
receiving a third data packet detection rule and a corresponding first offloading forwarding rule from a second session management function (SMF) corresponding to a second protocol data unit (PDU) session, the third data packet detection rule including third connection identity (ID) information; and
acquiring a data packet of a service flow according to the third data packet detection rule, and executing the first offloading forwarding rule on the data packet, the data packet of the service flow including the third connection ID information.

An embodiment of the present disclosure provides an AF, including:
a transmission unit, configured to transmit a first quality of service (QoS) request message of a service flow, the first QoS request message including first connection identity (ID) information and a first QoS parameter; and
the first QoS request message being configured for instructing a policy control function (PCF) to transmit, according to the first QoS request message, a first policy control and charging (PCC) rule to a first session management function (SMF) corresponding to a first protocol data unit (PDU) session, the first PCC rule including the first connection ID information and the first QoS parameter.

An embodiment of the present disclosure provides a PCF, including:
a receiving unit, configured to acquire a first quality of service (QoS) request message of a service flow, the first QoS request message including first connection identity (ID) information and a first QoS parameter;
a processing unit, configured to determine a first protocol data unit (PDU) session and a first policy control and charging (PCC) rule according to the first QoS request message, the first PCC rule including the first connection ID information and the first QoS parameter; and
a transmission unit, configured to transmit the first PCC rule to a first session management function (SMF) corresponding to the first PDU session,
the first PCC rule being configured for instructing the first SMF to transmit a first data packet detection rule and a corresponding first QoS execution rule to a user plane function (UPF), the first data packet detection rule including the first connection ID information.

An embodiment of the present disclosure provides first SMF corresponding to a first PDU session, including:
a receiving unit, configured to receive a first policy control and charging (PCC) rule from a policy control function (PCF), the first PCC rule including first connection identity (ID) information and a first quality of service (QoS) parameter;
a processing unit, configured to acquire a first data packet detection rule and a corresponding first QoS execution rule according to the first PCC rule, the first data packet detection rule including the first connection ID information; and
a transmission unit, configured to transmit the first data packet detection rule and the corresponding first QoS execution rule to a user plane function (UPF),
the first data packet detection rule being configured for instructing the UPF to acquire, according to the first data packet detection rule, a data packet of a service flow, and execute the first QoS execution rule on the data packet.

An embodiment of the present disclosure provides a UPF for transmitting service flows, including:
a receiving unit, configured to receive a first data packet detection rule and a corresponding first quality of service (QoS) execution rule from a first session management function (SMF) corresponding to a first protocol data unit (PDU) session, the first data packet detection rule including first connection identity (ID) information; and
a processing unit, configured to acquire a data packet of a service flow according to the first data packet detection rule, and execute the first QoS execution rule on the data packet, the data packet of the service flow including the first connection ID information.

An embodiment of the present disclosure provides an AF, including:
a transmission unit, configured to transmit a first route request message of a service flow, the first route request message including third connection identity (ID) information and a first routing rule; and
the first route request message being configured for instructing a policy control function (PCF) to transmit, according to the first route request message, a third policy control and charging (PCC) rule to a second session management function (SMF) corresponding to a second protocol data unit (PDU) session, the third PCC rule including the third connection ID information and the first routing rule.

An embodiment of the present disclosure provides a PCF, including:
a receiving unit, configured to acquire a first route request message of a service flow, the first route request message including third connection identity (ID) information and a first routing rule;
a processing unit, configured to determine a second protocol data unit (PDU) session and a third policy control and charging (PCC) rule according to the first route request message, the third PCC rule including the third connection ID information and the first routing rule; and
a transmission unit, configured to transmit the third PCC rule to a second session management function (SMF) corresponding to the second PDU session,
the third PCC rule being configured for instructing the second SMF to transmit a third data packet detection rule and a corresponding first offloading forwarding rule to a user plane function (UPF), the third data packet detection rule including the third connection ID information.

An embodiment of the present disclosure provides a second SMF corresponding to a second PDU session, including:
a receiving unit, configured to receive a third policy control and charging (PCC) rule from a policy control function (PCF), the third PCC rule including third connection identity (ID) information and a first routing rule;
a processing unit, configured to acquire a third data packet detection rule and a corresponding first offloading forwarding rule according to the third PCC rule, the third data packet detection rule including the third connection ID information; and
a transmission unit, configured to transmit the third data packet detection rule and the corresponding first offloading forwarding rule to a user plane function (UPF),
the third data packet detection rule being configured for instructing the UPF to acquire, according to the third data packet detection rule, a data packet of a service flow, and execute the first offloading forwarding rule on the data packet.

An embodiment of the present disclosure provides a UPF, including:
a receiving unit, configured to receive a third data packet detection rule and a corresponding first offloading forwarding rule from a second session management function (SMF) corresponding to a second protocol data unit (PDU) session, the third data packet detection rule including third connection identity (ID) information; and
a processing unit, configured to acquire a data packet of a service flow according to the third data packet detection rule, and execute the first offloading forwarding rule on the data packet, the data packet of the service flow including the third connection ID information.

An embodiment of the present disclosure provides a communication device, including: one or more processors; and a memory, configured to store one or more programs, the one or more programs, when executed by the one or more processors, causing the communication device to implement the message transmission method according to the embodiments of the present disclosure.

An embodiment of the present disclosure provides a computer-readable storage medium, having a computer program stored therein, the computer program, when run on a computer, causing the computer to implement the message transmission method according to the embodiments of the present disclosure.

An embodiment of the present disclosure provides a computer program product, including a computer program, the computer program, when executed by a computer, implementing the message transmission method according to the embodiments of the present disclosure.

According to the method provided in some implementations of the present disclosure, when an AF initiates a first QoS request message of a service flow to a PCF, first connection ID information and a first QoS parameter are carried in the first QoS request message, so that the PCF that receives the first QoS request message can confirm a first PDU session under the instruction of the first QoS request message, update or generate a first PCC rule, and transmit the updated or generated first PCC rule to a first SMF corresponding to the first PDU session, the first PCC rule carrying the first connection ID information and the corresponding first QoS parameter thereof, to be used to optimize network transmission, and reduce the quantity of times of interaction between the AF and the network.

### BRIEF DESCRIPTION OF THE DRAWINGS

FIG. 1 is a schematic diagram of a communication system architecture according to an embodiment of the present disclosure.
FIG. 2 is a system architectural diagram of a 5G network according to an embodiment of the present disclosure.
FIG. 3 is a schematic flowchart of a message transmission method according to an embodiment of the present disclosure.
FIG. 4 is a schematic interaction diagram of a message transmission method according to an embodiment of the present disclosure.
FIG. 5 is a schematic interaction diagram of a message transmission method according to another embodiment of the present disclosure.
FIG. 6 is a schematic interaction diagram of a message transmission method according to still another embodiment of the present disclosure.
FIG. 7 is a schematic interaction diagram of a message transmission method according to yet another embodiment of the present disclosure.
FIG. 8 is a schematic interaction diagram of a message transmission method according to yet another embodiment of the present disclosure.
FIG. 9 is a schematic flowchart of a message transmission method according to another embodiment of the present disclosure.
FIG. 10 is a schematic flowchart of a message transmission method according to still another embodiment of the present disclosure.
FIG. 11 is a schematic flowchart of a message transmission method according to yet another embodiment of the present disclosure.
FIG. 12 is a schematic flowchart of a message transmission method according to yet another embodiment of the present disclosure.
FIG. 13 is a schematic interaction diagram of a message transmission method according to yet another embodiment of the present disclosure.
FIG. 14 is a schematic interaction diagram of a message transmission method according to yet another embodiment of the present disclosure.
FIG. 15 is a schematic flowchart of a message transmission method according to yet another embodiment of the present disclosure.
FIG. 16 is a schematic flowchart of a message transmission method according to yet another embodiment of the present disclosure.
FIG. 17 is a schematic flowchart of a message transmission method according to yet another embodiment of the present disclosure.
FIG. 18 is a schematic block diagram of an AF according to an embodiment of the present disclosure.
FIG. 19 is a schematic block diagram of a PCF according to an embodiment of the present disclosure.
FIG. 20 is a schematic block diagram of a first SMF corresponding to a first PDU session according to an embodiment of the present disclosure.
FIG. 21 is a schematic block diagram of a UPF for transmitting service flows according to an embodiment of the present disclosure.
FIG. 22 is a schematic structural diagram of a communication device according to an embodiment of the present disclosure.

### DESCRIPTION OF EMBODIMENTS

To make the objectives, technical solutions, and advantages of the present disclosure clearer, exemplary embodiments according to the present disclosure are described in detail below with reference to the accompanying drawings. In the accompanying drawings, same reference numerals represent same elements throughout. The embodiments described herein are merely illustrative and are not be construed as limiting the scope of the present disclosure.

The technical solutions in the embodiments of the present disclosure can be applied to various communication systems, such as a Global System for Mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a 5G system, or a future evolved mobile communication system.

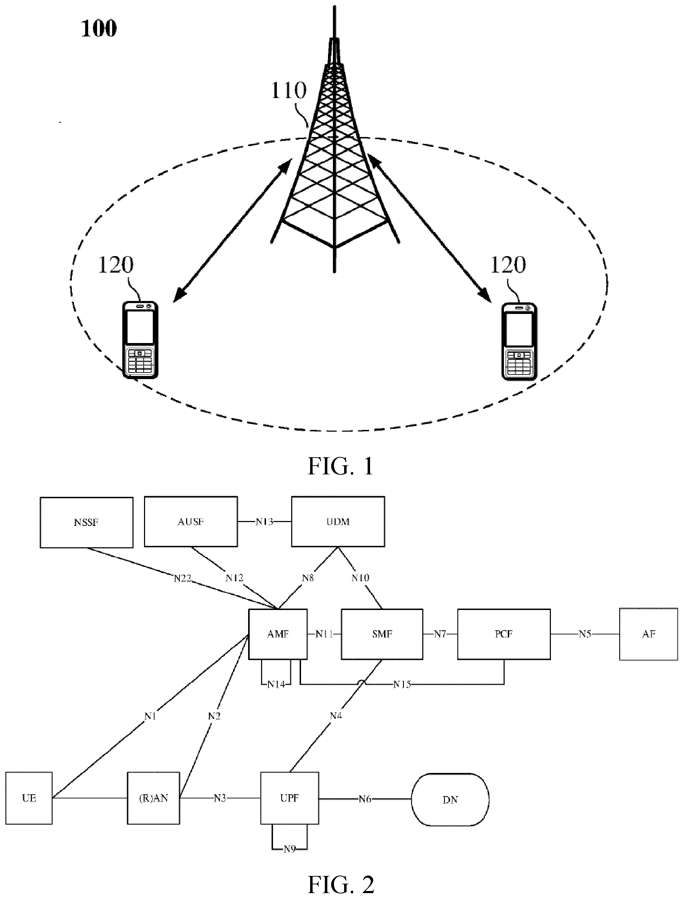

For example, a communication system 100 to which an embodiment of the present disclosure is applied is shown in FIG. 1. The communication system 100 may include a network device 110, and the network device 110 may be a device communicating with a terminal 120 (or referred to as a communication terminal or a terminal). The network device 110 may provide communication coverage for a specific geographic area, and may communicate with a terminal located inside the covered area. In some embodiments, the network device 110 may be a base transceiver station (BTS) in a GSM system or a CDMA system, a NodeB (NB) in a WCDMA system, an evolved NodeB (eNB or eNodeB) in an LTE system, a base station in a 5G communication system, or a wireless controller in a cloud radio access network (CRAN). Alternatively, the network device may be a network side device in a mobile switching center, a relay station, an access point, an in-vehicle device, a wearable device, a hub, a switch, a bridge, a router, or a 5G network, or may be a network device or the like in a future evolved public land mobile network (PLMN).

The communication system 100 further includes at least one terminal device 120 located within the coverage range of the network device 110. As used herein, "terminal" includes, but is not limited to, being connected through a wired line, for example, a public switched telephone network (PSTN), a digital subscriber line (DSL), a digital cable, a direct cable connection; and/or another data connection/network; and/or a wireless interface, for example, a cellular network, a wireless local area network (WLAN), a digital television network such as a digital television network of a DVB-H network, a satellite network, an AM-FM broadcast transmitter; and/or an apparatus of another terminal, which is configured to receive/send a communication signal; and/or an Internet of Things (IoT) device. The terminal that is configured to communicate through the wireless interface may be referred to as a "wireless communication terminal", a "wireless terminal", or a "mobile terminal". An example of the mobile terminal includes, but is not limited to, a satellite or a cellular phone; a personal communication system (PCS) terminal that combines a cellular radio telephone, data processing, fax, and data communication capabilities; and may be a PDA including a radio telephone, a beeper, Internet/Intranet access, a web browser, a memo pad, a calendar, and/or a global positioning system (GPS) receiver; and may be a conventional laptop and/or palmtop receiver or another electronic apparatus including a radio telephone transceiver. The terminal may be an access terminal, user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal in a 5G network, a terminal in a future evolved PLMN, or the like.

In some embodiments, the terminals 120 may perform device to device (D2D) communication with each other.

FIG. 1 shows one network device and two terminals as an example. In some embodiments, the communication system 100 may include a plurality of network devices, and in a coverage area of each network device, another quantity of terminals may be included. This is not limited in the embodiments of the present disclosure.

In some embodiments, the communication system 100 may further include another network element such as a PCF or an access mobility management function. This is not limited in the embodiments of the present disclosure.

In a network/system in the embodiments of the present disclosure, a device having a communication function may be referred to as a communication device. The communication system 100 shown in FIG. 1 is used as an example. The communication device may include a network device 110 and a terminal 120 that have a communication function. The network device 110 and the terminal 120 may be specific devices described above. Details are not described herein again.

The terms "system" and "network" may be used interchangeably in this specification. In this specification, the term "and/or" is merely used to describe an association relationship between associated objects, and indicates that three relationships may exist. For example, A and/or B may indicate the following three cases: Only A exists, both A and B exist, and only B exists.

FIG. 2 is a system architectural diagram of a 5G network according to an embodiment of the present disclosure. The solution provided in the present disclosure may be applied not only to the 5G system, but also to a subsequently evolved system of the 5G system. As shown in FIG. 2, devices involved in the 5G network system include: a terminal (UE), a radio access network RAN), a UPF, a data network (DN), an access and mobility management function (AMF), an SMF, a PCF, an AF, an authentication server function (AUSF), and a unified data management (UDM).

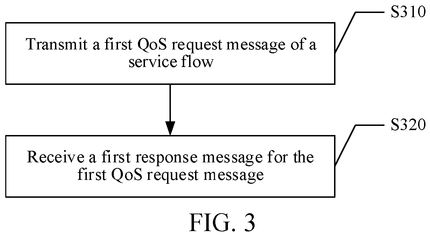

FIG. 3 is a schematic flowchart of a message transmission method according to an embodiment of the present disclosure. The method provided in the embodiment of FIG. 3 may be performed by an AF, but the present disclosure is not limited thereto.

As shown in FIG. 3, the method provided in this embodiment of the present disclosure may include the following operations:
S310: Transmit a first QoS request message of a service flow, the first QoS request message including first connection ID information and a first QoS parameter.

The first QoS request message is configured for instructing a PCF to transmit, according to the first QoS request message, a first PCC rule to a first SMF corresponding to a first PDU session, the first PCC rule including the first connection ID information and the first QoS parameter.

For example, the first QoS request message of the service flow may be transmitted to the PCF, the first QoS request message including an AF ID, the first connection ID information, and the first QoS parameter.

In this embodiment of the present disclosure, the QoS request message refers to a message transmitted by the AF to the network to request the execution of a corresponding QoS rule or QoS execution rule for a data packet transmitting the service flow. The first QoS request message may be any QoS request message. The AF may directly transmit the first QoS request message to the PCF, or indirectly transmit the first QoS request message to the PCF through an NEF. This is not limited in the present disclosure.

The first QoS request message in this embodiment of the present disclosure may include ID information (that is, an application function identity, which may be represented as an AF ID) of the AF that transmits the first QoS request message, and may further include the first connection ID information and the first QoS parameter.

The connection ID in this embodiment of the present disclosure includes connection ID information in the hypertext transfer protocol (HTTP) 3/ quick UDP Internet connection (QUIC) protocol, where UDP is the abbreviation of user datagram protocol. In the HTTP3/QUIC protocol, for header information of the interaction protocol between a service server and a user, connection ID information is added to the data packet header. In this way, when the user's IP address changes, the service server can still correctly associate the user's service context information based on the connection ID information. The first connection ID information may be any connection ID.

In this embodiment of the present disclosure, the first QoS parameter may be set according to actual service requirements, and this is not limited in the present disclosure.

In an exemplary embodiment, the first QoS request message may include a flow descriptor. The flow descriptor may include the first connection ID information. However, the present disclosure is not limited thereto. In other embodiments, the first connection ID information may be located outside the flow descriptor, that is, in the first QoS request message, the first connection ID information may be an information element parallel to the flow descriptor; or the first connection ID information is located in the flow descriptor. This is not limited in the present disclosure.

In an exemplary embodiment, the flow descriptor further includes at least one of the following: a source network (IP) address, a source port number, a destination network (IP) address, a destination port number, or a transport protocol.

In an exemplary embodiment, when the flow descriptor includes the transport protocol, the transport protocol includes a quick user datagram protocol (UDP) Internet connection (QUIC) protocol.

In an exemplary embodiment, the first QoS request message may further include a first network address of a terminal (for example, a UE IP address, for distinction, it is referred to as a first network address herein). When the first QoS request message includes the UE IP address, subsequent detection of the first data packet detection rule being performed on a data packet of a service flow transmitted by which UE can be directly determined based on the UE IP address, thereby simplifying the network transmission process. In other embodiments, the first QoS request message may alternatively include no UE IP address. In this case, during subsequent execution, an associated UE IP address may be determined first according to the first connection ID information, and then subsequent detection of the first data packet detection rule being performed on a data packet of a service flow transmitted by which UE is determined.

In an exemplary embodiment, the first QoS request message may further include a request validity time and/or effective location information.

In this embodiment of the present disclosure, the request validity time refers to the time during which the first QoS request message takes effect. After the request validity time expires, the first QoS parameter requested by the first QoS request message for the specific service flow with the first connection ID information of the UE will be invalid.

In this embodiment of the present disclosure, the effective location information refers to that the first QoS request message takes effect only when the UE is located in which geographical range or geographic location, and does not take effect when the UE is located outside the effective location information. For example, the UE moves beyond the effective location information, then the first QoS parameter requested by the AF is not applicable at this time.

In this embodiment of the present disclosure, the service flow refers to a service flow formed by transmission of uplink data packets transmitted by the terminal and/or downlink data packets transmitted by the service server in the network for one or certain services. The service may be set according to actual needs. For example, the service may be a multimedia service, but the present disclosure is not limited thereto.

In some embodiments, S320: Receive a first response message for the first QoS request message. The first response message may include first indication information. The first indication information may be configured for indicating whether to agree to the first QoS request message.

In this embodiment of the present disclosure, the AF may receive the first response message from the PCF and/or the NEF, and the first indication information in the first response message may be configured for indicating whether the PCF and/or the NEF agrees to the first QoS request message.

The first QoS request message may be configured for instructing the PCF to: when the first indication information indicates agreeing to the first QoS request message, confirm a first PDU session according to the first QoS request message, update or generate a first PCC rule, and transmit the first PCC rule to a first SMF corresponding to the first PDU session. The first PCC rule may include the first connection ID information and the first QoS parameter.

In an exemplary embodiment, when the first indication information indicates agreeing to the first QoS request message, the first response message may further include first transaction reference ID (which may also be referred to as transaction ID) information. The first transaction reference ID information is configured for determining the first connection ID information in the first QoS request message. Because the AF may initiate a plurality of requests to the network in actual situations, the UE IP address and the connection ID associated with the first QoS request message may all change subsequently. Therefore, when the PCF and/or the NEF agrees to the first QoS request message, the PCF and/or the NEF may return the first transaction reference ID information to the AF through the first response message, so that when the AF subsequently needs to update the first connection ID information to second connection ID information, the AF can uniquely determine, based on the first transaction reference ID information, first connection ID information in a first QoS request message to be updated.

In an exemplary embodiment, the method provided in this embodiment of the present disclosure may further include: transmitting a second QoS request message for updating the service flow, the second QoS request message including second connection ID information and the first transaction reference ID information; and the second QoS request message being configured for instructing the PCF to transmit, according to the second QoS request message, a second PCC rule to the first SMF, the second PCC rule including the second connection ID information, and the second PCC rule being obtained by updating the first PCC rule according to the second connection ID information and the first transaction reference ID information.

For example, the second QoS request message for updating the service flow is transmitted to the PCF. The second QoS request message may include the AF ID and the second connection ID information. In some embodiments, a second response message for the second QoS request message may be received. The second response message may include second indication information. The second indication information may be configured for indicating whether to agree to the second QoS request message.

The second QoS request message may be configured for instructing the PCF to: when the second indication information indicates agreeing to the second QoS request message, update the first PCC rule according to the second QoS request message to obtain a second PCC rule, and transmit the second PCC rule to the first SMF. The second PCC rule may include the second connection ID information.

In an exemplary embodiment, the second QoS request message may further include first transaction reference ID information.

According to the message transmission method provided in this implementation of the present disclosure, when an AF initiates a first QoS request message of a service flow to a PCF, first connection ID information and a first QoS parameter are carried in the first QoS request message, so that the PCF that receives the first QoS request message can confirm a first PDU session under the instruction of the first QoS request message, update or generate a first PCC rule, and transmit the updated or generated first PCC rule to a first SMF corresponding to the first PDU session, the first PCC rule carrying the first connection ID information and the corresponding first QoS parameter thereof, to be used to optimize network transmission, and reduce the quantity of times of interaction between the AF and the network.

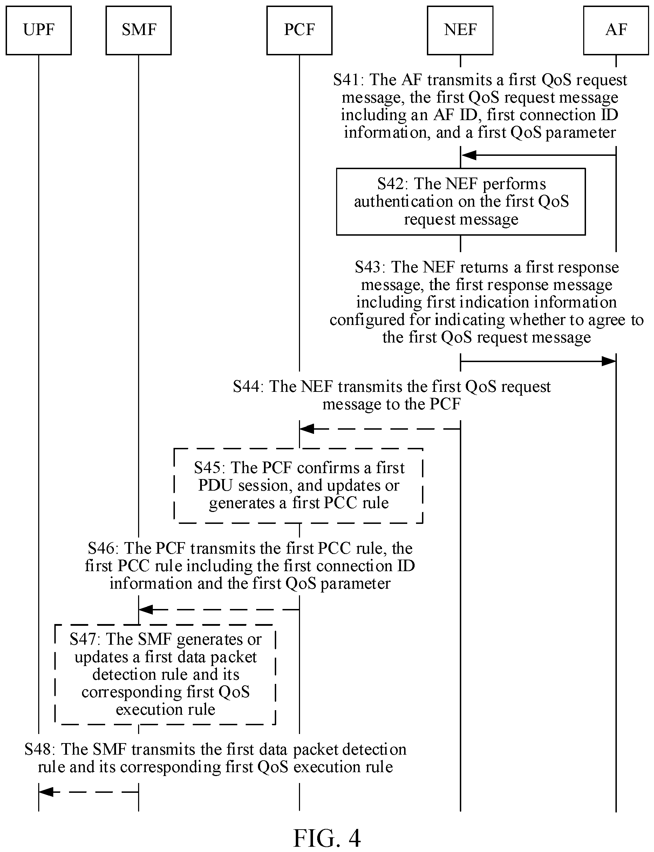

The embodiment of FIG 4 shows a schematic diagram in which an AF actively requests QoS guarantee for a specific service flow of the UE. As shown in FIG. 4, the method provided in this embodiment of the present disclosure may include the following operations:

S41: An AF transmits a first QoS request message to a network exposure function (NEF). The first QoS request message may include an AF ID, first connection ID information and a first QoS parameter.

In this embodiment of the present disclosure, the AF transmits the first QoS request message of the service flow to the NEF. The first QoS request message may include the AF ID, a UE IP address (a first network address of a terminal), a flow descriptor (which may include the first connection ID information, and may alternatively further include at least one of a destination IP address, a destination port number, a transport protocol, or the like), the first QoS parameter, and the like.

In some embodiments, the first QoS request message may further include a request validity time and/or effective location information of the first QoS request message. The effective location information may be represented by actual geographical location information, street name information, base station information, cell information, and the like. In this embodiment of the present disclosure, the request validity time and/or the effective location information are associated with a first connection ID.

In this embodiment of the present disclosure, the first connection ID information is added to the first QoS request message. In this way, even if when the UE IP address changes subsequently (for example, changes from a first UE IP address to a second UE IP address, such as from WiFi to 5G network, or from 5G network to 4G network), because the first connection ID information has not changed, the network still executes the same QoS policy information based on the same first QoS parameter, without the need for the AF to re-request QoS information, thereby reducing interaction between the AF and the network.

For example, it is assumed that the UE IP address changes from IP1 to IP2, when the UPF transmitting the service flow detects the data packet transmitted/received by the UE, although the source IP address/destination IP address of the data packet at this time changes from IP1 to IP2, because the connection ID information of the data packet detected by UPF is still the first connection ID information, the UPF executes the same first QoS execution rule.

In some embodiments, the first QoS request message transmitted by the AF to the NEF may also include at least one of service flow template information, data network name (DNN) information of the service flow, and/or single network slice selection assistance information (S-NSSAI) information, or the like. The information is used to indicate service flows that the request of the AF is for.

In some embodiments, the first QoS request message transmitted by the AF to the NEF may alternatively not include the DNN information of the service flow and/or S-NSSAI information, or the like. The AF may transmit the AF ID, the DNN information of the service flow and/or the S-NSSAI information to the NEF in advance through other messages. The NEF may store the AF ID, the service flow template information, the DNN information of the service flow, and/or the S-NSSAI information in association. When receiving the first QoS request message, the NEF may perform searching according to the AF ID carried in the first QoS request message to obtain the DNN information of the service flow and/or the S-NSSAI information, thereby reducing the volume of data carried in the first QoS request message.

In an exemplary embodiment, the service flow template information may include one or more of a source IP address (source network address), a source port number, a destination IP address (destination network address), a destination port number, a fully qualified domain name (FQDN), an APP ID, or the like of the service flow.

S42: After receiving the first QoS request message transmitted by the AF, the NEF performs authentication on the first QoS request message.

S43: The NEF returns a first response message to the AF. The first response message may include first indication information configured for indicating whether to agree to the first QoS request message.

In this embodiment of the present disclosure, the AF may transmit the first QoS request message to the NEF. After receiving the first QoS request message transmitted by the AF, the NEF may perform authentication on the first QoS request message, generate a corresponding first response message, and return the first response message to the AF.

The first response message may include first indication information indicating whether the NEF agrees to the first QoS request message. If the authentication on the first QoS request message succeeds, the first indication information indicates that the NEF agrees to the first QoS request message; and if the authentication on the first QoS request message fails, the first indication information indicates that the NEF rejects the first QoS request message, and the first response message may alternatively further include a rejection reason value.

S44: The NEF directly or indirectly transmits the first QoS request message to a PCF.

In this embodiment of the present disclosure, after the authentication on the first QoS request message by the NEF succeeds, the NEF may then transmit the first QoS request message to the PCF.

In some embodiments, after receiving the first QoS request message transmitted by the NEF, the PCF may perform authentication on the first QoS request message, generate a first response message, and return the first response message to the AF through the NEF. That is, the PCF and the NEF may perform double authentication on the first QoS request message.

In some other embodiments, after receiving the first QoS request message, the NEF may alternatively not perform authentication on the first QoS request message, but directly forward the first QoS request message to the PCF, and the PCF performs authentication on the first QoS request message.

The NEF further returns a first response message to the AF. If the first indication information indicates agreeing to the first QoS request message, the NEF may further return first transaction reference ID information to the AF.

If the first indication information indicates agreeing to the first QoS request message, S45 is subsequently performed; and if the first indication information indicates rejecting the first QoS request message, the process ends.

S45: After receiving the first QoS request message, the PCF may confirm a first PDU session, and update or generate a first PCC rule.

After receiving the first QoS request message transmitted by the NEF, the PCF may confirm the first PDU session according to the first QoS request message, and update or generate the first PCC rule according to the first QoS request message. The first connection ID information and the first QoS parameter are carried in the first PCC rule.

S46: The PCF may transmit the first PCC rule to an SMF. The first PCC rule may include the first connection ID information and the first QoS parameter.

The PCF then transmits the first PCC rule to the SMF. The SMF herein may be the first SMF corresponding to the first PDU session.

S47: After receiving the first PCC rule transmitted by the PCF, the SMF may generate or update a first data packet detection rule and its corresponding first QoS execution rule according to the first PCC rule.

The first data packet detection rule in this embodiment of the present disclosure includes the first connection ID information, that is, whether the data packet transmitted between the UE and the service server includes the first connection ID information is detected. The first QoS execution rule is generated based on the first QoS parameter, and the first QoS execution rule indicates that when it is detected according to the first data packet detection rule that the data packet of the service flow includes the first connection ID information, regardless of whether the UE IP address changes, the first QoS execution rule is executed.

The first data packet detection rule and its corresponding first QoS execution rule may be combined into the same rule, divided into different rules, used as a part of other rules, or used as a part of a QoS profile. The rule may have different names depending on the execution entity, and this is not limited in the present disclosure.

In this embodiment of the present disclosure, the first SMF may generate a service flow template according to the service flow template information. The PCF may obtain the service flow template information from the first QoS request message transmitted by the AF, or may obtain the service flow template information in other manners. This is not limited in the present disclosure.

In this embodiment of the present disclosure, the service flow template may include one or more of the source IP address, the source port number, the destination IP address, the destination port number, the FQDN, the APP ID, the IP protocol, or the like.

In this embodiment of the present disclosure, the SMF may define different data packet detection rules, and one thereof or a combination of several thereof may be used as the first data packet detection rule.

In this embodiment of the present disclosure, the SMF may reuse a packet detection rule (PDR) as the first data packet detection rule, that is, add the first connection ID information to the PDR, and which PDRs to add and how to add to the PDRs may be flexibly set. In other embodiments, the SMF may alternatively add a new first data packet detection rule and a first QoS execution rule.

S48: The SMF transmits the first data packet detection rule and its corresponding first QoS execution rule to the UPF transmitting the service flow.

Although in the embodiment of FIG. 4, information between the AF and the PCF being exchanged through the NEF is used as an example, the present disclosure is not limited thereto. In other embodiments, the AF may alternatively directly communicate with the PCF, that is, the PCF directly acquires the first QoS request message from the AF; and the NEF may alternatively store information requested by the AF in a UDR, and the PCF may receive the information from the UDR.

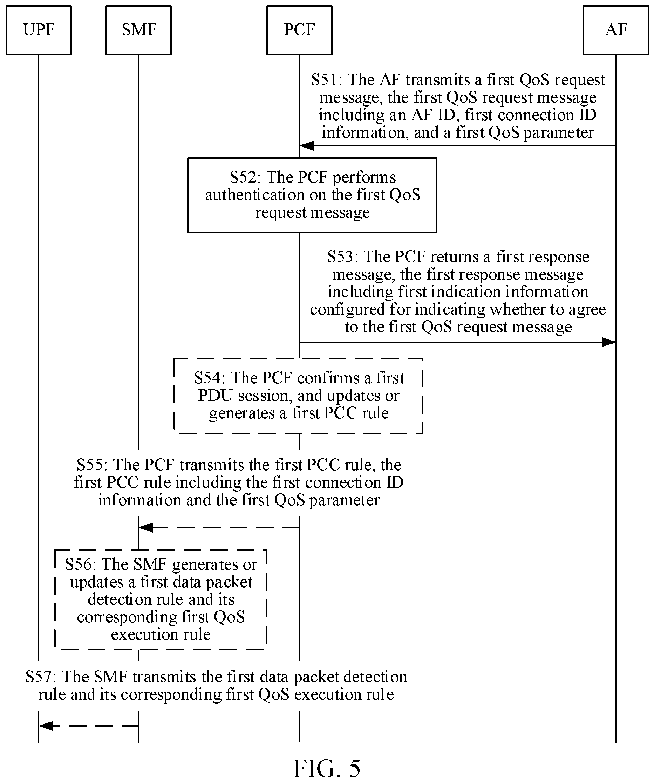

As shown in FIG. 5, the method provided in this embodiment of the present disclosure may include the following operations:
S51: An AF transmits a first QoS request message to a PCF. The first QoS request message may include an AF ID, first connection ID information, and a first QoS parameter.

In the embodiment of FIG. 5, the AF transmits the first QoS request message of the service flow to the PCF. The first QoS request message may include the AF ID, a UE IP address (a first network address of a terminal), a flow descriptor (which may include the first connection ID information, and may alternatively further include at least one of a destination IP address, a destination port number, a transport protocol, or the like), the first QoS parameter, and the like. In some embodiments, the first QoS request message may further include a request validity time and/or effective location information of the first QoS request message.

S52: After receiving the first QoS request message transmitted by the AF, the PCF performs authentication on the first QoS request message.

The PCF performs authentication on the first QoS request message of the AF, and returns a first response message to the AF. The first response message may include first indication information of "whether to agree to the first QoS request message". If the first QoS request message is rejected, a rejection reason value may be included. If the first QoS request message is agreed to, the PCF may further return the first transaction reference ID information to the AF.

S53: The PCF returns a first response message to the AF. The first response message may include first indication information configured for indicating whether to agree to the first QoS request message.

If the PCF agrees to the first QoS request message, S54 is subsequently performed; and if the PCF rejects the first QoS request message, the process ends.

S54: After receiving the first QoS request message, the PCF may confirm a first PDU session, and update or generate a first PCC rule.

In this embodiment of the present disclosure, in the first PCC rule, the first connection ID information and the corresponding first QoS parameter may be added to a service flow detection template.

S55: The PCF may transmit the first PCC rule to an SMF. The first PCC rule may include the first connection ID information and the first QoS parameter.

The PCF confirms which PDU sessions will be affected by the first QoS request message of the AF, uses a PDU session confirmed to be affected by the first QoS request message of the AF as the first PDU session, updates or generates a new first PCC rule, and transmits the first PCC rule to a first SMF corresponding to the first PDU session.

S56: After receiving the first PCC rule transmitted by the PCF, the SMF may generate or update a first data packet detection rule and its corresponding first QoS execution rule according to the first PCC rule.

The SMF may generate or update the first data packet detection rule (including the first connection ID information) and the corresponding first QoS execution rule according to the first PCC rule, and transmits the corresponding first data packet detection rule and the first QoS execution rule to the UPF transmitting the service flow. The UPF executes the corresponding first data packet detection rule, and when it is detected that the data packet includes the first connection ID information, executes the corresponding first QoS execution rule on the data packet.

In this embodiment of the present disclosure, the first SMF may generate a service flow template according to the service flow template information. The PCF may obtain the service flow template information from the first QoS request message transmitted by the AF, or may obtain the service flow template information in other manners. This is not limited in the present disclosure.

In this embodiment of the present disclosure, the service flow template may include one or more of the source IP address, the source port number, the destination IP address, the destination port number, the FQDN, the APP ID, the IP protocol, or the like.

S57: The SMF transmits the first data packet detection rule and its corresponding first QoS execution rule to the UPF transmitting the service flow.

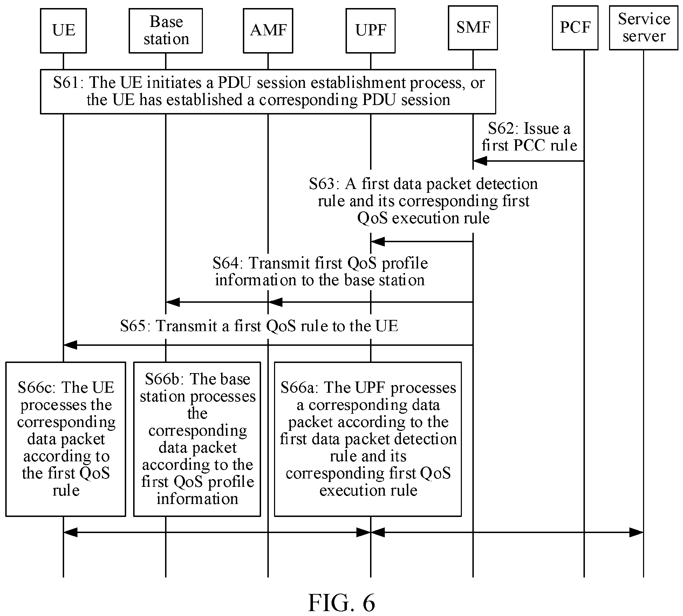

In the embodiment of FIG. 6, an example in which UE is used as a terminal and a base station is used as a network device is used. As shown in FIG. 6, the method provided in this embodiment of the present disclosure may include the following operations:
S61: The UE initiates a PDU session establishment process, or the UE has established a corresponding PDU session.

In this embodiment of the present disclosure, the UE has established a PDU session for this service (such as a specific DNN or an S-NSSAI), or the UE initiates a PDU session establishment process for this service (for example, for a specific DNN or an S-NSSAI).

S62: A PCF issues a first PCC rule to an SMF (which refers to a first SMF herein).

In this embodiment of the present disclosure, the first PCC rule may include first connection ID information and a first QoS parameter.

S63: The SMF receives the first PCC rule issued by the PCF; updates or generates a first data packet detection rule and a corresponding first QoS execution rule according to the first connection ID information and the first QoS parameter carried in the first PCC rule; generates first QoS profile information according to the first data packet detection rule and the corresponding first QoS execution rule, where the first QoS profile information may include the first data packet detection rule and the corresponding first QoS execution rule, and the first data packet detection rule may include the first connection ID information; and transmits the first data packet detection rule and the corresponding first QoS execution rule to a UPF, where the UPF herein may be an anchor UPF or an intermediate UPF.

S64. The SMF may transmit the first QoS profile information to an AMF. The first QoS profile information may include the first data packet detection rule and the corresponding first QoS execution rule.

In this embodiment of the present disclosure, the SMF transmits the first QoS profile information or the updated first QoS profile information to the AMF. The first QoS profile information includes the first data packet detection rule and the corresponding first QoS execution rule.

The AMF receives the first QoS profile information transmitted by the SMF, and transmits the first QoS profile information to the base station.

The base station receives the first QoS profile information transmitted by the AMF.

In this embodiment of the present disclosure, the first QoS profile information may be configured in the base station, to detect and process uplink data packets transmitted by the UE and downlink data packets transmitted by the service server respectively.

S65: The SMF may further generate a first QoS rule according to the first PCC rule. The first QoS rule may include the first connection ID information and a first QoS flow ID parameter, and transmit the first QoS rule to the UE.

S66a: The UPF processes a corresponding data packet according to the first data packet detection rule and the corresponding first QoS execution rule.

In this embodiment of the present disclosure, the first data packet detection rule and the corresponding first QoS execution rule may be configured in the UPF, to detect and process uplink data packets transmitted by the UE or downlink data packets transmitted by the service server. The first QoS execution rule may also detect and process both the uplink data packets transmitted by the UE and the downlink data packets transmitted by the service server.

S66b: The base station processes the corresponding data packet according to the first QoS profile information.

S66c: The UE processes the corresponding data packet according to the first QoS rule.

The execution order of S63, S64, and S65 in the embodiment of FIG. 6 is not limited, and these operations may alternatively be performed in parallel. The execution order of S66a, S66b, and S66c is not limited, and these operations may alternatively be executed in parallel.

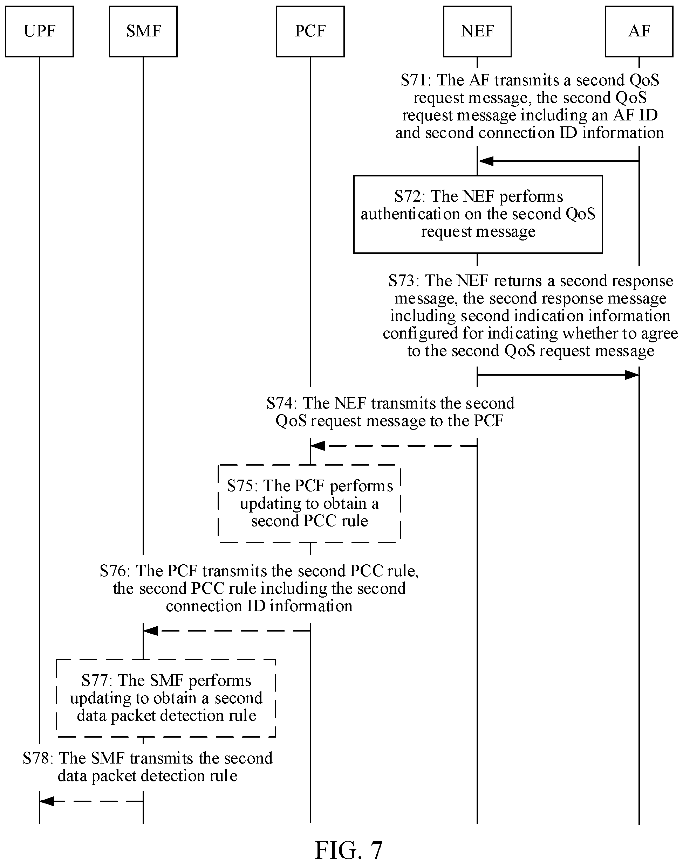

As shown in FIG. 7, the method provided in this embodiment of the present disclosure may include the following operations:

S71: An AF transmits a second QoS request message to an NEF. The second QoS request message may include an AF ID and second connection ID information.

In some embodiments, the second QoS request message may further include a second QoS parameter.

In some embodiments, the second QoS request message may include no second QoS parameter, that is, the AF instructs the network that when updating the first connection ID information to the second connection ID information, the first QoS parameter may still be used.

In some other embodiments, the second QoS request message may further include a second QoS parameter, that is, the AF instructs the network to update the first QoS parameter to the second QoS parameter when updating the first connection ID information to the second connection ID information.

In this embodiment of the present disclosure, when the AF updates the connection ID information of the data packet that is interacted with the UE, for example, it is assumed that the first connection ID information is updated to the second connection ID information, the AF may transmit a second QoS request message for updating the service flow to the NEF or the PCF. The second QoS request message may include an AF ID, first transaction reference ID information, a flow descriptor (which includes updated connection ID information (for example, the second connection ID information), and may alternatively further include at least one of a destination IP address, a destination port number, a transport protocol, or the like), and may alternatively further include an updated QoS parameter (second QoS parameter), an updated UE IP address (a second network address of the UE), and the like.

In some embodiments, when the service server changes, for example, migrating from one service server to another service server, different service servers may have different connection ID pools. After the service server is changed, connection ID information may be re-assigned to the service flow. In this case, a second QoS request message may be initiated to change the connection ID information, for example, requesting to change the first connection ID information to the second connection ID information.

In some other embodiments, the service server may also set a validity time for the connection ID information of the service flow. When the validity time expires, the service server may re-assign connection ID information. In this case, the service server initiates a second QoS request message to update the connection ID information, for example, requesting to change the first connection ID information to the second connection ID information.

In some other embodiments, when the UE moves beyond the effective location information set in the first QoS request message, the first QoS parameter in the first QoS request message is invalid. In some embodiments, the second QoS request message may also include updated effective location information, and the updated effective location information is associated with the second connection ID information.

S72: After receiving the second QoS request message transmitted by the AF, the NEF performs authentication on the second QoS request message.

S73: The NEF returns a second response message to the AF. The second response message may include second indication information configured for indicating whether to agree to the second QoS request message.

In this embodiment of the present disclosure, the AF may transmit a second QoS request message to the NEF. The second QoS request message may carry the AF ID and the second connection ID information. After receiving the second QoS request message transmitted by the AF, the NEF may perform authentication on the second QoS request message, generate a corresponding second response message, and return the second response message to the AF.

The second response message may include indication information indicating whether the NEF agrees to the second QoS request message. If the authentication on the second QoS request message succeeds, the second indication information indicates that the NEF agrees to the second QoS request message; and if the authentication on the second QoS request message fails, the second indication information indicates that the NEF rejects the second QoS request message, and the second response message may alternatively further include a rejection reason value.

S74: The NEF directly or indirectly transmits the second QoS request message to a PCF.

In this embodiment of the present disclosure, after the authentication on the second QoS request message by the NEF succeeds, the NEF may then transmit the second QoS request message to the PCF.

S75: After receiving the second QoS request message, the PCF may update the first PCC rule according to the second QoS request message and generate a second PCC rule. The second PCC rule may include the second connection ID information. In some embodiments, the second PCC rule may further include a second QoS parameter.

S76: The PCF may transmit the second PCC rule to the SMF (that is, a first SMF). The second PCC rule may include the second connection ID information, and may alternatively further include the second QoS parameter.

After receiving the second QoS request message transmitted by the NEF, the PCF may update the first PCC rule according to the second QoS request message and generate a second PCC rule, where the second PCC rule carries the second connection ID information, and may alternatively further carry the second QoS parameter; and then transmit the second PCC rule to the SMF, where the SMF herein may be a first SMF corresponding to the first PDU session.

S77: After receiving the second PCC rule transmitted by the PCF, the SMF may update a first data packet detection rule according to the second PCC rule to obtain a second data packet detection rule. In some embodiments, a first QoS execution rule may be further updated to obtain a second QoS execution rule.

S78: The SMF transmits the second data packet detection rule, and may alternatively further transmit the second QoS execution rule, to the UPF transmitting the service flow.

The PCF updates the first PCC rule to obtain the second PCC rule and transmits the second PCC rule to the first SMF. The first SMF updates the first data packet detection rule to obtain the second data packet detection rule. In some embodiments, the first SMF may further update the first QoS execution rule to obtain the second QoS execution rule and transmits the second QoS execution rule to the UPF.

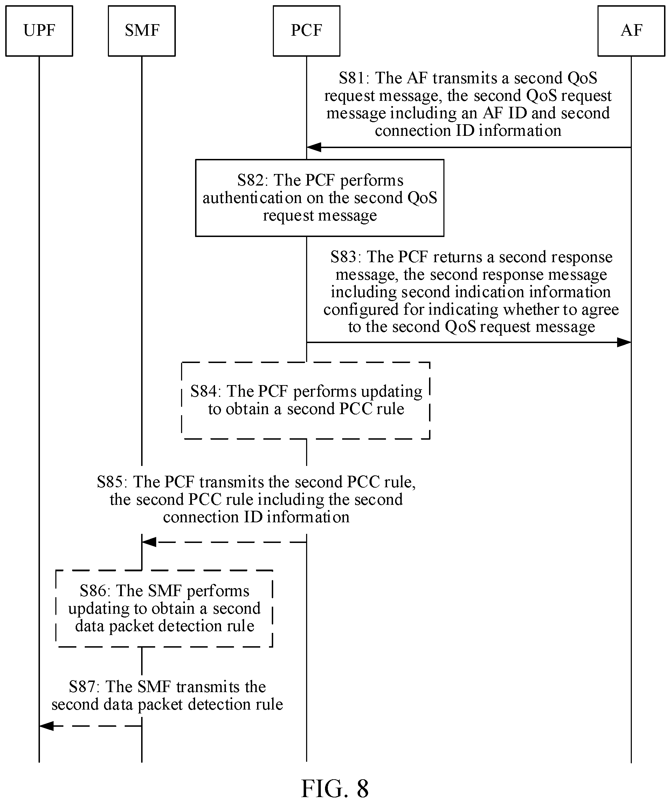

As shown in FIG. 8, the method provided in this embodiment of the present disclosure may include the following operations:
S81: An AF transmits a second QoS request message to a PCF. The second QoS request message may include an AF ID and second connection ID information.

In some embodiments, the second QoS request message may further include a second QoS parameter.

S82: After receiving the second QoS request message transmitted by the AF, the PCF performs authentication on the second QoS request message.

S83: The PCF returns a second response message to the AF. The second response message may include second indication information configured for indicating whether to agree to the second QoS request message.

In this embodiment of the present disclosure, the AF may transmit a second QoS request message to the PCF. The second QoS request message may carry the AF ID and the second connection ID information. After receiving the second QoS request message transmitted by the AF, the PCF may perform authentication on the second QoS request message, generate a corresponding second response message, and return the second response message to the AF.

The second response message may include indication information indicating whether to agree to the second QoS request message. If the authentication on the second QoS request message succeeds, the second indication information indicates that the PCF agrees to the second QoS request message; and if the authentication on the second QoS request message fails, the second indication information indicates that the PCF rejects the second QoS request message, and the second response message may alternatively further include a rejection reason value.

S84: After receiving the second QoS request message, the PCF may update the first PCC rule according to the second QoS request message and generate a second PCC rule. The second PCC rule may include the second connection ID information. In some embodiments, the second PCC rule may further include a second QoS parameter.

S85: The PCF may transmit the second PCC rule to the SMF (that is, a first SMF). The second PCC rule may include the second connection ID information, and may alternatively further include the second QoS parameter.

After receiving the second QoS request message transmitted by the NEF, the PCF may update the first PCC rule according to the second QoS request message and generate a second PCC rule, where the second PCC rule carries the second connection ID information, and may alternatively further carry the second QoS parameter; and then transmit the second PCC rule to the SMF, where the SMF herein may be a first SMF corresponding to the first PDU session.

S86: After receiving the second PCC rule transmitted by the PCF, the SMF may update a first data packet detection rule according to the second PCC rule to obtain a second data packet detection rule, and may alternatively further update a first QoS execution rule to obtain a second QoS execution rule.

S87: The SMF transmits the second data packet detection rule, and may alternatively transmit the second QoS execution rule, to a UPF transmitting the service flow.

The message transmission method provided in this implementation of the present disclosure can optimize mobile communication network transmission for the HTTP3/QUIC protocol, includes a QoS flow guarantee method for the HTTP3/QUIC protocol and the like, thereby reducing interaction between the AF and the network, and increasing the network's more sophisticated data processing capability.

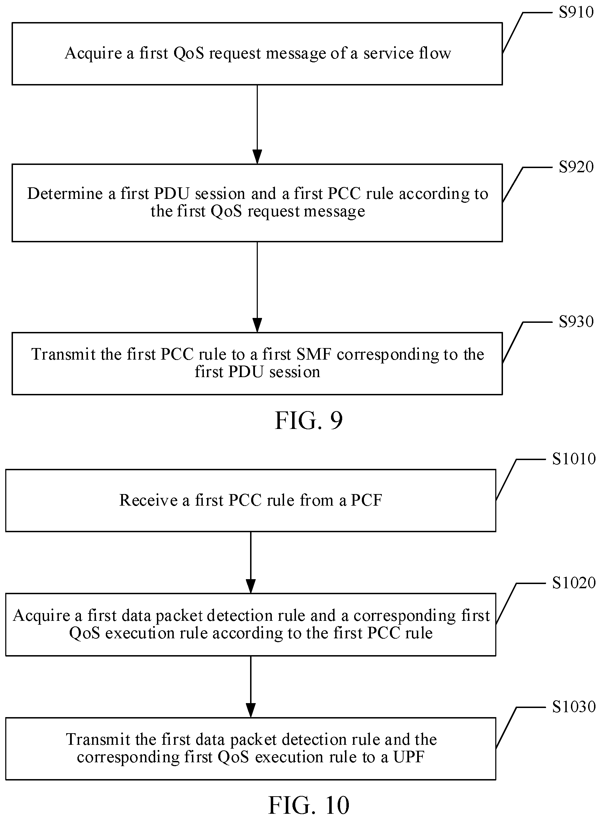

FIG. 9 is a schematic flowchart of a message transmission method according to another embodiment of the present disclosure. The method provided in the embodiment of FIG. 9 may be performed by a PCF.

As shown in FIG. 9, the method provided in this embodiment of the present disclosure may include the following operations:
S910: Acquire a first QoS request message of a service flow, the first QoS request message including first connection ID information and a first QoS parameter. In some embodiments, the first QoS request message may include an AF ID, the first connection ID information, and the first QoS parameter;
S920: Determine a first PDU session and a first PCC rule according to the first QoS request message, the first PCC rule including the first connection ID information and the first QoS parameter. The first PCC rule is configured for instructing the first SMF to transmit a first data packet detection rule and a corresponding first QoS execution rule to a UPF. The first data packet detection rule includes the first connection ID information.

For example, when the first indication information in the first response message for the first QoS request message indicates agreeing to the first QoS request message, a first PDU session may be confirmed according to the first QoS request message, and a first PCC rule is updated or generated.

S930: Transmit the first PCC rule to a first SMF corresponding to the first PDU session.

The first PCC rule may be configured for instructing the first SMF to generate or update a first data packet detection rule and a corresponding first QoS execution rule. The first data packet detection rule may include the first connection ID information, and the first data packet detection rule and the corresponding first QoS execution rule may be transmitted to the UPF transmitting the service flow.

For other contents in the embodiment of FIG. 9, reference may be made to the foregoing other embodiments.

FIG. 10 is a schematic flowchart of a message transmission method according to still another embodiment of the present disclosure. The method provided in the embodiment of FIG. 10 may be performed by a first SMF corresponding to a first PDU session.

As shown in FIG. 10, the method provided in this embodiment of the present disclosure may include the following operations:
S1010: Receive a first PCC rule from a PCF. The first PCC rule may include first connection ID information and a first QoS parameter;
S1020: Acquire a first data packet detection rule and a corresponding first QoS execution rule according to the first PCC rule. The first data packet detection rule may include the first connection ID information. For example, the first data packet detection rule and the corresponding first QoS execution rule may be generated or updated.

S1030: Transmit the first data packet detection rule and the corresponding first QoS execution rule to a UPF. Herein, the UPF may be a UPF for transmitting service flows.
the first data packet detection rule being configured for instructing the UPF to acquire, according to the first data packet detection rule, a data packet of a service flow, and execute the first QoS execution rule on the data packet.

For example, the first data packet detection rule may be configured for instructing the UPF to: execute the first data packet detection rule, and when it is detected that the data packet of the service flow includes the first connection ID information, execute the corresponding first QoS execution rule on the data packet.

For other contents in the embodiment of FIG. 10, reference may be made to the foregoing other embodiments.

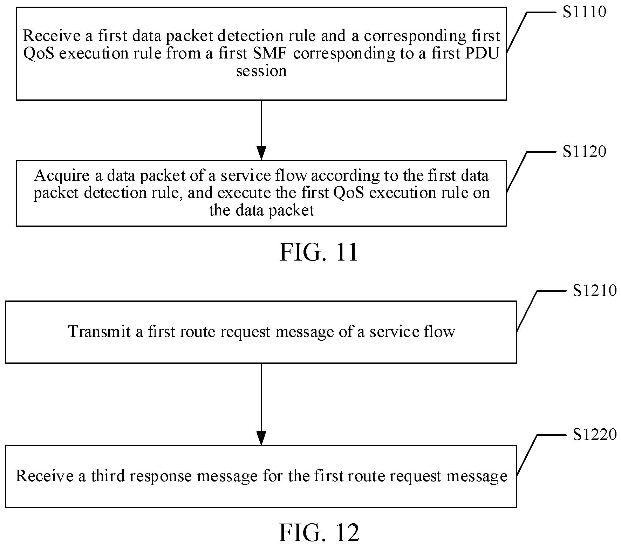

FIG. 11 is a schematic flowchart of a message transmission method according to still another embodiment of the present disclosure. The method provided in the embodiment of FIG. 11 may be performed by UPF for transmitting service flows.

As shown in FIG. 11, the method provided in this embodiment of the present disclosure may include the following operations:
S1110: Receive a first data packet detection rule and a corresponding first QoS execution rule from a first SMF corresponding to a first PDU session. The first data packet detection rule may include first connection ID information.

S1120: Acquire a data packet of a service flow according to the first data packet detection rule, and execute the first QoS execution rule on the data packet, the data packet of the service flow including the first connection ID information.

For example, the first data packet detection rule may be executed. When it is detected that the data packet of the service flow includes the first connection ID information, the corresponding first QoS execution rule is executed on the data packet.

For other contents in the embodiment of FIG. 11, reference may be made to the foregoing other embodiments.

FIG. 12 is a schematic flowchart of a message transmission method according to an embodiment of the present disclosure. The method provided in the embodiment of FIG. 12 may be performed by an AF, but the present disclosure is not limited thereto.

As shown in FIG. 12, the method provided in this embodiment of the present disclosure may include the following operations:
S1210: Transmit a first route request message of a service flow, the first route request message including third connection ID information and a first routing rule. For example, the first route request message of the service flow may be transmitted to a PCF. The first route request message may include an AF ID, third connection ID information, and a first routing rule. The first route request message is configured for instructing a PCF to transmit, according to the first route request message, a third PCC rule to a second SMF corresponding to a second PDU session. The third PCC rule includes the third connection ID information and the first routing rule.

Routing rules in this embodiment of the present disclosure refer to relevant rules used to determine forwarding of data packets, routing paths, and the like.

In some embodiments, S 1220: Receive a third response message for the first route request message. The third response message may include third indication information, and the third indication information may be configured for indicating whether to agree to the first route request message.

For example, the first route request message may be configured for instructing the PCF to: when third indication information indicates agreeing to the first route request message, confirm a second PDU session according to the first route request message, update or generate a third PCC rule, and transmit third PCC rule to a second SMF corresponding to the second PDU session, the third PCC rule including the third connection ID information and the first routing rule.

In an exemplary embodiment, the first route request message may include a service flow template, and the service flow template may include the third connection ID information. In some embodiments, the third connection ID information may be included in the service flow template, or may be located outside the service flow template. This is not limited in the present disclosure.

In an exemplary embodiment, the service flow template may further include at least one of the following: a source network address, a source port number, a destination network address, a destination port number, an FQDN, or an APP ID.

In an exemplary embodiment, the first route request message may further include a first network address of a terminal.

In an exemplary embodiment, the first route request message may further include a request validity time and/or effective location information.

In an exemplary embodiment, when the third indication information indicates agreeing to the first route request message, the third response message further includes second transaction reference ID information. The second transaction reference ID information is configured for determining the third connection ID information in the first route request message.

In an exemplary embodiment, the method may further include:
transmitting a second route request message for updating the service flow, the second route request message including fourth connection ID information and the second transaction reference ID information; and
the second route request message being configured for instructing the PCF to transmit, according to the second route request message, a fourth PCC rule to the second SMF, the fourth PCC rule including the fourth connection ID information, and the fourth PCC rule being obtained by updating the third PCC rule according to the fourth connection ID information and the second transaction reference ID information.

For example, the second route request message for updating the service flow is transmitted to the PCF. The second route request message may include the AF ID and the fourth connection ID information. A fourth response message for the second route request message is received. The fourth response message may include fourth indication information, and the fourth indication information may be configured for indicating whether to agree to the second route request message.

The second route request message may be configured for instructing the PCF to: when the fourth indication information indicates agreeing to the second route request message, update the third PCC rule according to the second route request message to obtain a fourth PCC rule, and transmit the fourth PCC rule to the second SMF. The fourth PCC rule may include the fourth connection ID information.

In an exemplary embodiment, the second route request message may further include second transaction reference ID information.

In this embodiment of the present disclosure, by adding the third connection ID information to the first route request message, when the UE IP address changes but the third connection ID information does not change, the network still executes the same first routing rule, without the need for the AF to re-request routing information, thereby reducing the quantity of times of interaction between the AF and the network.

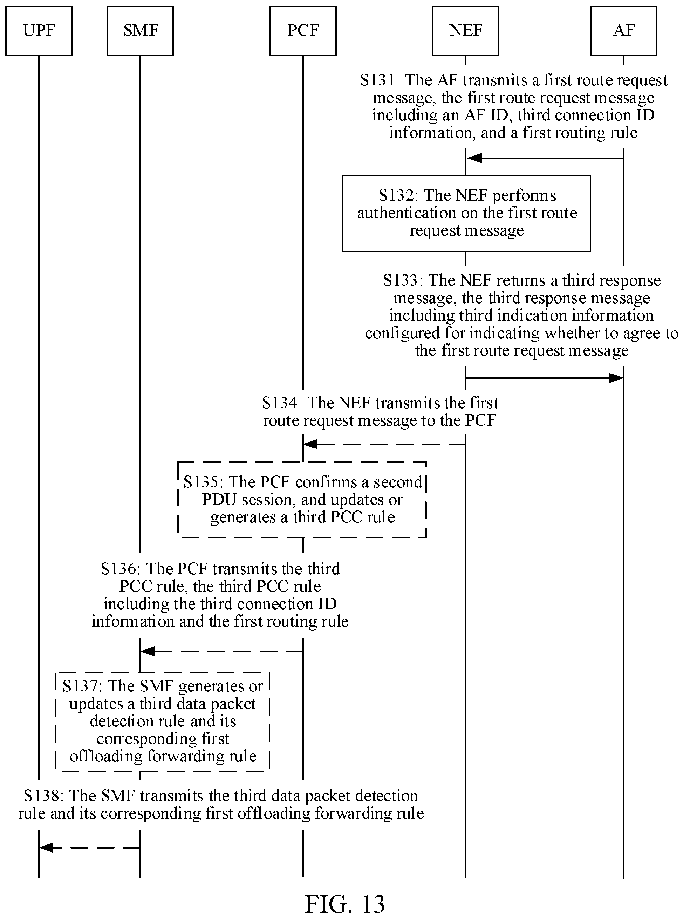

The following exemplarily describes the method provided in the embodiment of FIG. 12 with reference to FIG. 13.

As shown in FIG. 13, the method provided in this embodiment of the present disclosure may include the following operations:
S131: An AF transmits a first route request message to an NEF. The first route request message may include an AF ID, third connection ID information, and a first routing rule.

The AF transmits the first route request message of the service flow to the NEF. The first route request message may include the AF ID, a UE IP address (a first network address of a terminal), a service flow template (which may include the third connection ID information, and may alternatively further include one or more of a source network address, a source port number, a destination IP address, a destination port number, an FQDN, an APP ID, or the like), a first routing rule, and the like. In some embodiments, the first route request message may further include a request validity time and/or effective location information.

In some embodiments, the first route request message transmitted by the AF to the NEF may further include at least one of the DNN information of the service flow and/or the S-NSSAI information or the like. The information is used to indicate service flows that the request of the AF is for.

In some embodiments, the first route request message transmitted by the AF to the NEF may alternatively not include the DNN information of the service flow and/or S-NSSAI information, or the like. The AF may transmit the AF ID, the DNN information of the service flow and/or the S-NSSAI information to the NEF in advance through other messages. The NEF may store the AF ID, the DNN information of the service flow, and/or the S-NSSAI information in association. When receiving the first route request message, the NEF may perform searching according to the AF ID carried in the first route request message to obtain the DNN information of the service flow and/or the S-NSSAI information, thereby reducing the volume of data carried in the first route request message.

S132: After receiving the first route request message transmitted by the AF, the NEF performs authentication on the first route request message.

S133: The NEF returns a third response message to the AF. The third response message may include third indication information configured for indicating whether to agree to the first route request message.

The NEF performs authentication on the first route request message of the AF, and returns a third response message to the AF. The third response message may include third indication information of "whether to agree to the first route request message". If the first route request message is rejected, a rejection reason value may be included.

If the authentication on the first route request message succeeds, the third indication information indicates agreeing to the first route request message; and if the authentication on the first route request message fails, the third indication information indicates rejecting the first route request message.

S134: The NEF directly or indirectly transmits the first route request message to a PCF.

In this embodiment of the present disclosure, after the authentication on the first route request message by the NEF succeeds, the NEF may then transmit the first route request message to the PCF. The NEF directly or indirectly (through other network elements) transmits the first route request message to the PCF. The NEF further returns a third response message to the AF. If the first route request message is agreed to, the NEF may further return second transaction reference ID information to the AF.

If the first route request message is agreed, S135 is subsequently executed; and if the first route request message is rejected, the process ends.

S135: After receiving the first route request message, the PCF may confirm a second PDU session, and update or generate a third PCC rule.

S136: The PCF may transmit the third PCC rule to an SMF. The third PCC rule may include the third connection ID information and the first routing rule.

After receiving the first route request message transmitted by the NEF, the PCF may confirm the second PDU session according to the first route request message, update or generate a third PCC rule according to the first route request message, the third PCC rule carrying the third connection ID information and the first routing rule, and then transmit the third PCC rule to the SMF. The SMF herein may be the second SMF corresponding to the second PDU session.

S137: After receiving the third PCC rule transmitted by the PCF, the SMF may generate or update a third data packet detection rule and its corresponding first offloading forwarding rule according to the third PCC rule.

The third data packet detection rule and its corresponding first offloading forwarding rule may be combined into the same rule, divided into different rules, used as a part of other rules, or used as a part of a QoS profile. The rule may have different names depending on the execution entity, and this is not limited in the present disclosure.

In this embodiment of the present disclosure, the second SMF may generate a service flow template according to the service flow template information. The PCF may obtain the service flow template information from the first route request message transmitted by the AF, or may obtain the service flow template information in other manners. This is not limited in the present disclosure.

In this embodiment of the present disclosure, the second SMF may define different data packet detection rules, and one thereof or a combination of several thereof may be used as the third data packet detection rule.

In this embodiment of the present disclosure, the second SMF may reuse a PDR as the third data packet detection rule, that is, add the third connection ID information to the PDR, and which PDRs to add and how to add to the PDRs may be flexibly set. In other embodiments, the second SMF may alternatively add a new third data packet detection rule and a first offloading forwarding rule.

S138: The SMF transmits the third data packet detection rule and its corresponding first offloading forwarding rule to a UPF transmitting the service flow.

Although in the embodiment of FIG. 13, information between the AF and the PCF being exchanged through the NEF is used as an example, the present disclosure is not limited thereto. In other embodiments, the AF may alternatively directly communicate with the PCF, that is, the PCF directly acquires the first route request message from the AF; and the NEF may alternatively store information requested by the AF in a UDR, and the PCF may receive the information from the UDR.

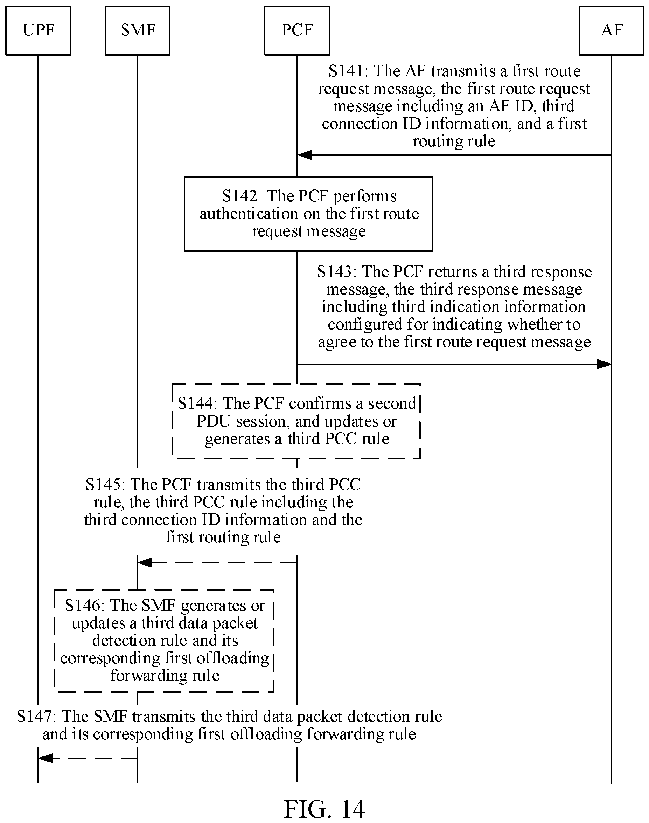

Descriptions are provided below by using an example with reference to FIG. 14. As shown in FIG. 14, the method provided in this embodiment of the present disclosure may include the following operations:

S141: An AF transmits a first route request message to a PCF. The first route request message may include an AF ID, third connection ID information, and a first routing rule.

The AF transmits the first route request message to the PCF. The first route request message may include the AF ID, a UE IP address (a first network address of a terminal), a service flow template (which may include the third connection ID information, and may alternatively further include one or more of a destination IP address, a destination port number, an FQDN, an APP ID, or the like), a first routing rule, and the like. In some embodiments, the first route request message may further include a request validity time and/or effective location information.

S142: After receiving the first route request message transmitted by the AF, the PCF performs authentication on the first route request message.

The PCF performs authentication on the first route request message of the AF, and returns a third response message to the AF. The third response message may include third indication information of "whether to agree to the first route request message". If the first route request message is rejected, a rejection reason value may be included.

If the first route request message is agreed, S143 is subsequently executed; and if the first route request message is rejected, the process ends.

S143: The PCF returns a third response message to the AF. The third response message may include third indication information configured for indicating whether to agree to the first route request message.

The PCF may further return a third response message to the AF. If the first route request message is agreed to, the PCF may further return second transaction reference ID information to the AF.

S144: After receiving the first route request message, the PCF may confirm a second PDU session, and update or generate a third PCC rule.

The PCF confirms which PDU sessions will be affected by the first route request message of the AF, to determine the second PDU session, updates or generates a new third PCC rule, and transmits the third PCC rule to the second SMF corresponding to the second PDU session.

In this embodiment of the present disclosure, in the third PCC rule, the third connection ID information and the corresponding first routing rule/first routing policy may be added to a service flow detection template.

S145: The PCF may transmit the third PCC rule to an SMF. The third PCC rule may include the third connection ID information and the first routing rule.

S146: After receiving the third PCC rule transmitted by the PCF, the SMF may generate or update a third data packet detection rule and its corresponding first offloading forwarding rule according to the third PCC rule.

The SMF may generate or update the third data packet detection rule (including the third connection ID information) and the corresponding first offloading forwarding rule according to the third PCC rule. The SMF transmits the generated or updated third data packet detection rule and first offloading forwarding rule to the UPF.

For example, if the UPF is an intermediate UPF, a third data packet detection rule and a first offloading forwarding rule may be added to the intermediate UPF, so that when the intermediate UPF detects specific third connection ID information, the corresponding data packet is forwarded to the corresponding UPF.

S147: The SMF transmits the third data packet detection rule and its corresponding first offloading forwarding rule to a UPF transmitting the service flow.

In this embodiment of the present disclosure, when the AF updates the connection ID information of the data packet that is interacted with the UE (for example, it is assumed that the third connection ID information is updated to the fourth connection ID information), the AF may transmit the updated second route request message to the NEF or the PCF. The second route request message may include the AF ID, the second transaction reference ID information, the service flow template (which may include the fourth connection ID information, and may alternatively further include one or more of the destination IP address, the destination port number, the FQDN, the APP ID, or the like), and the like. In some embodiments, the second route request message may further include a second routing rule and the like.

After receiving the second route request message, the PCF may update the third PCC rule according to the second route request message to obtain a fourth PCC rule. The fourth PCC rule may include the fourth connection ID information. In some embodiments, the fourth PCC rule may further include a second routing rule, and the fourth PCC rule may be transmitted to the SMF.

After receiving the fourth PCC rule, the SMF may update the corresponding service flow detection template according to the fourth PCC rule and transmit the result to the UPF.

The message transmission method provided in this implementation of the present disclosure provides a solution for optimizing mobile communication network transmission for the HTTP3/QUIC protocol, and includes a data distribution manner for the HTTP3/QUIC protocol, thereby reducing interaction between the AF and the network, and increasing the network's more sophisticated data processing capability.

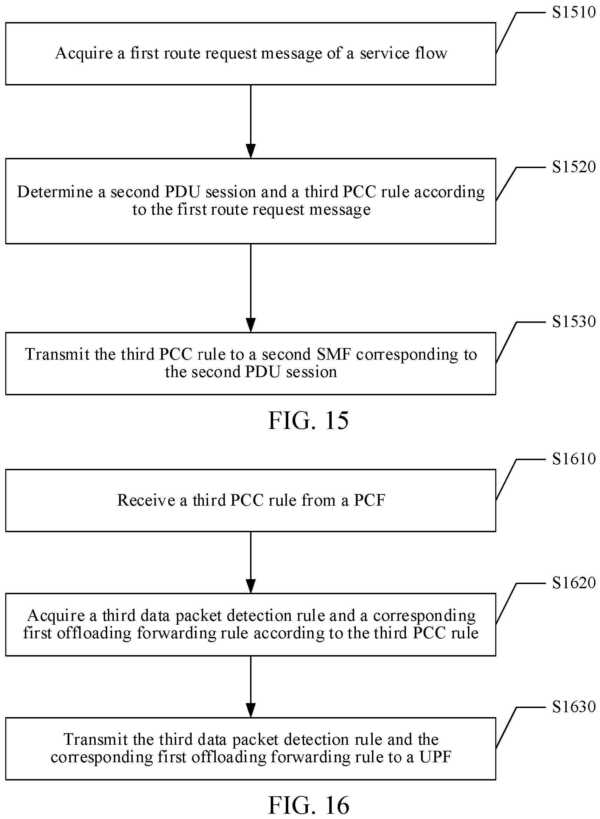

FIG. 15 is a schematic flowchart of a message transmission method according to another embodiment of the present disclosure. The method provided in the embodiment of FIG. 15 may be performed by a PCF.

As shown in FIG. 15, the method provided in this embodiment of the present disclosure may include the following operations:
S1510: Acquire a first route request message of a service flow. The first route request message may include third connection ID information and a first routing rule. In some embodiments, the first route request message may further include an AF ID.

S1520: Determine a second PDU session and a third PCC rule according to the first route request message, the third PCC rule including the third connection ID information and the first routing rule.

For example, when the third indication information in the third response message for the first route request message indicates agreeing to the first route request message, a second PDU session may be confirmed according to the first route request message, and a third PCC rule is updated or generated.

S1530: Transmit the third PCC rule to a second SMF corresponding to the second PDU session.

the third PCC rule being configured for instructing the second SMF to transmit a third data packet detection rule and a corresponding first offloading forwarding rule to a user plane function (UPF), the third data packet detection rule including the third connection ID information.

For example, the third PCC rule may be configured for instructing the second SMF to generate or update a third data packet detection rule and a corresponding first offloading forwarding rule. The third data packet detection rule may include the third connection ID information, and the third data packet detection rule and the corresponding first offloading forwarding rule may be transmitted to the UPF transmitting the service flow.

For other contents in the embodiment of FIG. 15, reference may be made to the foregoing other embodiments.

FIG. 16 is a schematic flowchart of a message transmission method according to still another embodiment of the present disclosure. The method provided in the embodiment of FIG. 16 may be performed by a second SMF corresponding to a second PDU session.

As shown in FIG. 16, the method provided in this embodiment of the present disclosure may include the following operations:
S1610: Receive a third PCC rule from a PCF. The third PCC rule may include third connection ID information and a first routing rule.

S1620: Acquire a third data packet detection rule and a corresponding first offloading forwarding rule according to the third PCC rule. The third data packet detection rule may include the third connection ID information. For example, the third data packet detection rule and the corresponding first offloading forwarding rule may be generated or updated.

S1630: Transmit the third data packet detection rule and the corresponding first offloading forwarding rule to a UPF.

the third data packet detection rule being configured for instructing the UPF to acquire, according to the third data packet detection rule, a data packet of a service flow, and execute the first offloading forwarding rule on the data packet.

For example, the third data packet detection rule may be configured for instructing the UPF to: execute the third data packet detection rule, and when it is detected that the data packet of the service flow includes the third connection ID information, execute the corresponding first offloading forwarding rule on the data packet.

For other contents in the embodiment of FIG. 16, reference may be made to the foregoing other embodiments.

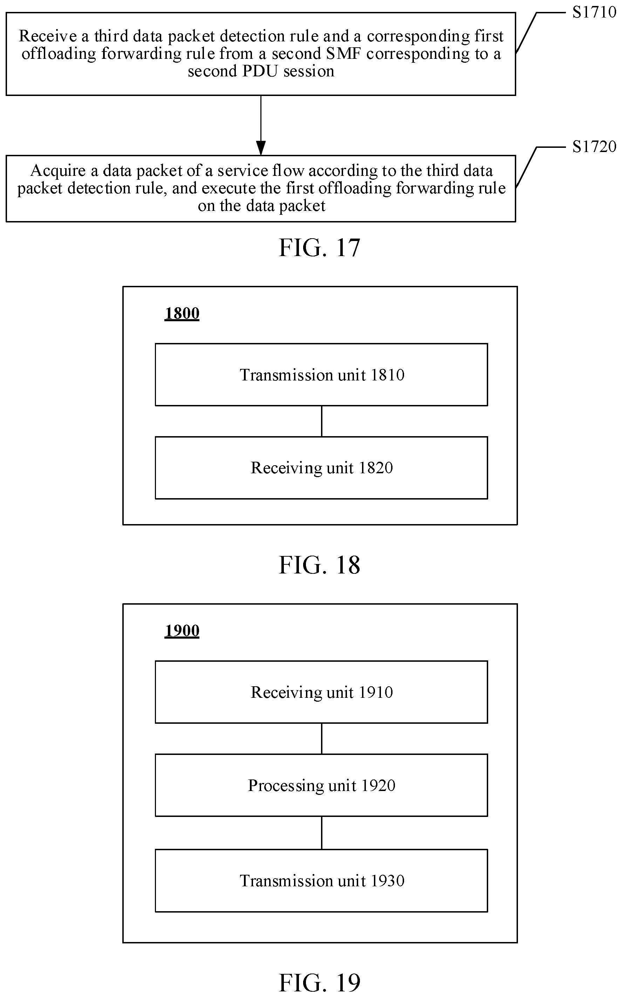

FIG. 17 is a schematic flowchart of a message transmission method according to still another embodiment of the present disclosure. The method provided in the embodiment of FIG. 17 may be performed by UPF for transmitting service flows.

As shown in FIG. 17, the method provided in this embodiment of the present disclosure may include the following operations:
S1710: Receive a third data packet detection rule and a corresponding first offloading forwarding rule from a second SMF corresponding to a second PDU session. The third data packet detection rule may include third connection ID information.

S1720: Acquire a data packet of a service flow according to the third data packet detection rule, and execute the first offloading forwarding rule on the data packet, the data packet of the service flow including the third connection ID information.

For example, the third data packet detection rule may be executed. When it is detected that the data packet of the service flow includes the third connection ID information, the corresponding first offloading forwarding rule is executed on the data packet.

For other contents in the embodiment of FIG. 17, reference may be made to the foregoing other embodiments.

An AF 1800 provided in the embodiment of FIG. 18 may include a transmission unit 1810. In some embodiments, the AF 1800 may further include a receiving unit 1820.

The transmission unit 1810 is configured to transmit a first QoS request message of a service flow, the first QoS request message including first connection ID information and a first QoS parameter; and
the first QoS request message being configured for instructing a policy control function (PCF) to transmit, according to the first QoS request message, a first policy control and charging (PCC) rule to a first session management function (SMF) corresponding to a first protocol data unit (PDU) session, the first PCC rule including the first connection ID information and the first QoS parameter.

In some embodiments, the first QoS request message includes a flow descriptor, the flow descriptor including the first connection ID information.

In some embodiments, the flow descriptor further includes at least one of the following: a source network address, a source port number, a destination network address, a destination port number, or a transport protocol.

In some embodiments, when the flow descriptor includes the transport protocol, the transport protocol includes a quick user datagram protocol (UDP) Internet connection (QUIC) protocol.

In some embodiments, the first QoS request message further includes a request validity time and/or effective location information.

In some embodiments, the receiving unit 1820 is configured to:
receiving a first response message for the first QoS request message, the first response message including first indication information, the first indication information being configured for indicating whether to agree to the first QoS request message.

In some embodiments, when the first indication information is configured for indicating agreeing to the first QoS request message, the first response message further includes first transaction reference ID information, the first transaction reference ID information being configured for determining the first connection ID information in the first QoS request message.

In some embodiments, the transmission unit 1810 is further configured to:
transmitting a second QoS request message for updating the service flow, the second QoS request message including second connection ID information and the first transaction reference ID information; and
the second QoS request message being configured for instructing the PCF to transmit, according to the second QoS request message, a second PCC rule to the first SMF, the second PCC rule including the second connection ID information, and the second PCC rule being obtained by updating the first PCC rule according to the second connection ID information and the first transaction reference ID information.

For other contents in the embodiment of FIG. 18, reference may be made to the foregoing other embodiments.

A PCF 1900 provided in FIG. 19 may include a receiving unit 1910, a processing unit 1920, and a transmission unit 1930.

The receiving unit 1910 is configured to acquire a first QoS request message of a service flow, the first QoS request message including first connection ID information and a first QoS parameter;
the processing unit 1920 is configured to determine a first PDU session and a first PCC rule according to the first QoS request message, the first PCC rule including the first connection ID information and the first QoS parameter; and
the transmission unit 1930 is configured to transmit the first PCC rule to a first SMF corresponding to the first PDU session,
the first PCC rule being configured for instructing the first SMF to transmit a first data packet detection rule and a corresponding first QoS execution rule to a user plane function (UPF), the first data packet detection rule including the first connection ID information.

For other contents in the embodiment of FIG. 19, reference may be made to the foregoing other embodiments.

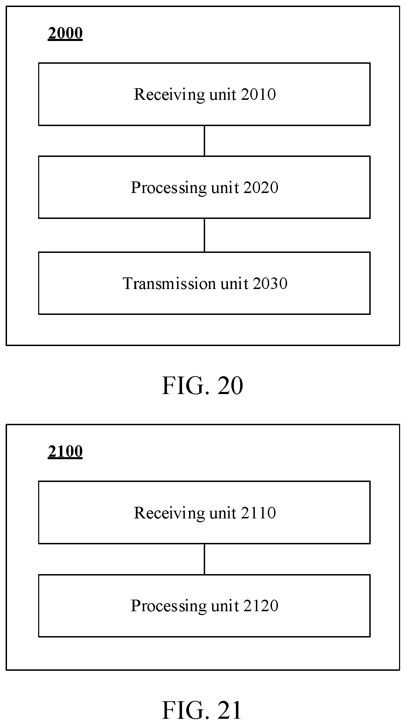

A first SMF 2000 corresponding to a first PDU session provided in the embodiment of FIG. 20 may include a receiving unit 2010, a processing unit 2020, and a transmission unit 2030.

The receiving unit 2010 is configured to receive a first PCC rule from a PCF, the first PCC rule including first connection ID information and a first QoS parameter;
the processing unit 2020 is configured to acquire a first data packet detection rule and a corresponding first QoS execution rule according to the first PCC rule, the first data packet detection rule including the first connection ID information; and
the transmission unit 2030 is configured to transmit the first data packet detection rule and the corresponding first QoS execution rule to a UPF,
the first data packet detection rule being configured for instructing the UPF to acquire, according to the first data packet detection rule, a data packet of a service flow, and execute the first QoS execution rule on the data packet.

For other contents in the embodiment of FIG. 20, reference may be made to the foregoing other embodiments.

A UPF 2100 for transmitting service flows provided in the embodiment of FIG. 21 may include a receiving unit 2110 and a processing unit 2120.

The receiving unit 2110 is configured to receive a first data packet detection rule and a corresponding first QoS execution rule from a first SMF corresponding to a first PDU session, the first data packet detection rule including first connection ID information; and
the processing unit 2120 is configured to acquire a data packet of a service flow according to the first data packet detection rule, and execute the first QoS execution rule on the data packet, the data packet of the service flow including the first connection ID information.

For other contents in the embodiment of FIG. 21, reference may be made to the foregoing other embodiments.

An embodiment of the present disclosure further provides an AF. The AF may include:
a transmission unit, configured to transmit a first route request message of a service flow, the first route request message including third connection identity (ID) information and a first routing rule; and
the first route request message being configured for instructing a policy control function (PCF) to transmit, according to the first route request message, a third policy control and charging (PCC) rule to a second session management function (SMF) corresponding to a second protocol data unit (PDU) session, the third PCC rule including the third connection ID information and the first routing rule.

In some embodiments, the first route request message includes a service flow template, the service flow template including the third connection ID information.

In some embodiments, the service flow template further includes at least one of the following: a source network address, a source port number, a destination network address, a destination port number, a fully qualified domain name (FQDN), or an application identity (APP ID).

In some embodiments, the first route request message further includes a request validity time and/or effective location information.

In some embodiments, the AF further includes a receiving unit, configured to:
receiving a third response message for the first route request message, the third response message including third indication information, the third indication information being configured for indicating whether to agree to the first route request message.

In some embodiments, when the third indication information is configured for indicating agreeing to the first route request message, the third response message further includes second transaction reference ID information, the second transaction reference ID information being configured for determining the third connection ID information in the first route request message.

In some embodiments, the transmission unit is further configured to:
transmitting a second route request message for updating the service flow, the second route request message including fourth connection ID information and the second transaction reference ID information; and
the second route request message being configured for instructing the PCF to transmit, according to the second route request message, a fourth PCC rule to the second SMF, the fourth PCC rule including the fourth connection ID information, and the fourth PCC rule being obtained by updating the third PCC rule according to the fourth connection ID information and the second transaction reference ID information.

For other contents in this embodiment of the present disclosure, reference may be made to the foregoing other embodiments.

An embodiment of the present disclosure further provides a PCF. The PCF may include:
a receiving unit, configured to acquire a first route request message of a service flow, the first route request message including third connection identity (ID) information and a first routing rule;
a processing unit, configured to determine a second protocol data unit (PDU) session and a third policy control and charging (PCC) rule according to the first route request message, the third PCC rule including the third connection ID information and the first routing rule; and
a transmission unit, configured to transmit the third PCC rule to a second session management function (SMF) corresponding to the second PDU session,
the third PCC rule being configured for instructing the second SMF to transmit a third data packet detection rule and a corresponding first offloading forwarding rule to a user plane function (UPF), the third data packet detection rule including the third connection ID information.

For other contents in this embodiment of the present disclosure, reference may be made to the foregoing other embodiments.

An embodiment of the present disclosure further provides a second SMF corresponding to a second PDU session. The second SMF may include:
a receiving unit, configured to receive a third policy control and charging (PCC) rule from a policy control function (PCF), the third PCC rule including third connection identity (ID) information and a first routing rule;
a processing unit, configured to acquire a third data packet detection rule and a corresponding first offloading forwarding rule according to the third PCC rule, the third data packet detection rule including the third connection ID information; and
a transmission unit, configured to transmit the third data packet detection rule and the corresponding first offloading forwarding rule to a user plane function (UPF),
the third data packet detection rule being configured for instructing the UPF to acquire, according to the third data packet detection rule, a data packet of a service flow, and execute the first offloading forwarding rule on the data packet.

For other contents in this embodiment of the present disclosure, reference may be made to the foregoing other embodiments.

An embodiment of the present disclosure further provides a UPF for transmitting service flows. The UPF may include:
a receiving unit, configured to receive a third data packet detection rule and a corresponding first offloading forwarding rule from a second session management function (SMF) corresponding to a second protocol data unit (PDU) session, the third data packet detection rule including third connection identity (ID) information; and
a processing unit, configured to acquire a data packet of a service flow according to the third data packet detection rule, and execute the first offloading forwarding rule on the data packet, the data packet of the service flow including the third connection ID information.

For other contents in this embodiment of the present disclosure, reference may be made to the foregoing other embodiments.

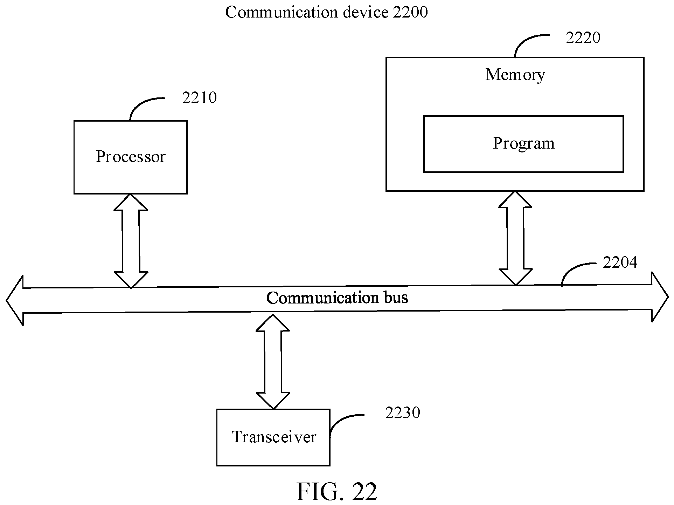

FIG. 22 is a schematic structural diagram of a communication device 2200 according to an embodiment of the present disclosure. The communication device may be a terminal, for example, a UE, a network device, for example, a base station, or a PCF and/or an NEF and/or an AF and/or an AMF and/or an SMF and/or a UPF. The communication device 2200 shown in FIG. 22 includes a processor 2210. The processor 2210 may invoke a computer program from a memory and run the computer program, to implement the method in the embodiments of the present disclosure.

In some embodiments, as shown in FIG. 22, the communication device 2200 may further include a memory 2220. The processor 2210 may invoke the computer program from the memory 2220 and run the computer program, to implement the method in the embodiments of the present disclosure.

The memory 2220 may be a component independent of the processor 2210, or may be integrated into the processor 2210.

In some embodiments, as shown in FIG. 22, the communication device 2200 may further include a transceiver 2230, and the processor 2210 may control the transceiver 2230 to communicate with another device and specifically may transmit information or data to another device or receive information or data transmitted by another device.

The transceiver 2230 may include a transmitter and a receiver. The transceiver 2230 may further include an antenna, and a quantity of the antenna can be one or more.

In some embodiments, the communication device 2200 may specifically be the network elements in the embodiments of the present disclosure, and the communication device 2200 can implement corresponding procedures implemented by the network elements in various methods in the embodiments of the present disclosure. For brevity, details are not described herein again.

In some embodiments, the communication device 2200 may specifically be a network device in the embodiments of the present disclosure, and the communication device 2200 can implement corresponding procedures implemented by the network device in various methods in the embodiments of the present disclosure. For brevity, details are not described herein again.

In some embodiments, the communication device 2200 may specifically be a mobile terminal/a terminal in the embodiments of the present disclosure, and the communication device 2200 can implement corresponding procedures implemented by the mobile terminal/the terminal in various methods in the embodiments of the present disclosure. For brevity, details are not described herein again.

The processor of this embodiment of the present disclosure may be an integrated circuit chip, and has a signal processing capability. In an implementation process, steps in the foregoing method embodiments can be implemented by using a hardware integrated logical circuit in the processor, or by using instructions in a form of software.

The processor may be a general purpose processor, a digital signal processor (Digital Signal Processor, DSP), an application-specific integrated circuit (Application Specific Integrated Circuit, ASIC), a field-programmable gate array (Field Programmable Gate Array, FPGA), or another programmable logic device, discrete gate or transistor logic device, or discrete hardware component. The processor can implement or execute methods, steps, and logical block diagrams disclosed in the embodiments of the present disclosure. The general-purpose processor may be a microprocessor, or the processor may be any conventional processor and the like. Steps of the method disclosed with reference to the embodiment of the present disclosure may be directly implemented by a hardware decoding processor, or implemented by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware thereof.

The memory in the embodiments of the present disclosure may be a volatile memory or a nonvolatile memory, or may include a volatile memory and a nonvolatile memory. The non-volatile memory may be a read-only memory (ROM), a programmable ROM (PROM), an erasable programmable read-only memory (EPROM), an electrically EPROM (EEPROM), or a flash memory. The volatile memory may be a random access memory (RAM), and is used as an external cache. Through exemplary but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM) and a direct rambus random access memory (DR RAM). The memory in the systems and methods described in this specification is aimed at including but being not limited to these and any memory of another proper type. The description of the memory is exemplary but not limitative.

An embodiment of the present disclosure further provides a computer-readable storage medium, configured to store a computer program.

In some embodiments, the computer-readable storage medium may be applied to the network device in the embodiments of the present disclosure, and the computer program causes a computer to perform corresponding procedures implemented by the network device in the methods in the embodiments of the present disclosure. For brevity, details are not described herein again.

In some embodiments, the computer-readable storage medium may be applied to the network elements in the embodiments of the present disclosure, and the computer program causes a computer to perform corresponding procedures implemented by the network elements in the methods in the embodiments of the present disclosure. For brevity, details are not described herein again.

In some embodiments, the computer-readable storage medium may be applied to the network device in the mobile terminal/the terminal in the embodiments of the present disclosure, and the computer program causes a computer to perform corresponding procedures implemented by the mobile terminal/the terminal in the methods in the embodiments of the present disclosure. For brevity, details are not described herein again.

An embodiment of the present disclosure further provides a computer program product, including computer program instructions.

In some embodiments, the computer program product may be applied to the network device in the embodiments of the present disclosure, and the computer program instructions cause a computer to perform corresponding procedures implemented by the network device in the methods in the embodiments of the present disclosure. For brevity, details are not described herein again.

In some embodiments, the computer program product may be applied to the network elements in the embodiments of the present disclosure, and the computer program instructions cause a computer to perform corresponding procedures implemented by the network elements in the methods in the embodiments of the present disclosure. For brevity, details are not described herein again.

In some embodiments, the computer program product may be applied to the mobile terminal/the terminal in the embodiments of the present disclosure, and the computer program instructions cause a computer to perform corresponding procedures implemented by the mobile terminal/the terminal in the methods in the embodiments of the present disclosure. For brevity, details are not described herein again.

An embodiment of the present disclosure further provides a computer program.

In some embodiments, the computer program may be applied to the network device in the embodiments of the present disclosure, and when the computer program is run on the computer, the computer is caused to perform corresponding procedures implemented by the network device in the methods in the embodiments of the present disclosure. For brevity, details are not described herein again.

In some embodiments, the computer program may be applied to the network elements in the embodiments of the present disclosure, and when the computer program is run on the computer, the computer is caused to perform corresponding procedures implemented by the network elements in the methods in the embodiments of the present disclosure. For brevity, details are not described herein again.

In some embodiments, the computer program may be applied to the network device in the mobile terminal/the terminal in the embodiments of the present disclosure, and when the computer program is run on the computer, the computer is caused to perform corresponding procedures implemented by the mobile terminal/the terminal in the methods in the embodiments of the present disclosure. For brevity, details are not described herein again.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but such implementation is not to be considered beyond the scope of the present disclosure.

A person skilled in the art may clearly understand that for convenience and conciseness of description, for specific working processes of the foregoing systems, apparatuses and units, reference may be made to the corresponding processes in the foregoing method embodiments, and details are not described herein again.

In the several embodiments provided in the present disclosure, the disclosed system, apparatus and method may be implemented in other manners. For example, the described apparatus embodiments are merely exemplary. For example, the unit division is merely logical function division and may be other division during actual implementation. For example, a plurality of units or components may be combined or integrated into another system, or some features may be ignored or not performed.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present disclosure may be integrated into one processing unit, or each of the units may be physically separated, or two or more units may be integrated into one unit.

When the functions are implemented in the form of a software functional unit and sold or used as an independent product, the functions may be stored in a computer readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A message transmission method, performed by an application function (AF), the method comprising:
transmitting a first quality of service (QoS) request message of a service flow, the first QoS request message comprising first connection identity (ID) information and a first QoS parameter; and
the first QoS request message being configured for instructing a policy control function (PCF) to transmit, according to the first QoS request message, a first policy control and charging (PCC) rule to a first session management function (SMF) corresponding to a first protocol data unit (PDU) session, the first PCC rule comprising the first connection ID information and the first QoS parameter.

2. The method according to claim 1, wherein the first QoS request message comprises a flow descriptor, the flow descriptor comprising the first connection ID information.

3. The method according to claim 2, wherein the flow descriptor further comprises at least one of the following: a source network address, a source port number, a destination network address, a destination port number, or a transport protocol.

4. The method according to claim 3, wherein when the flow descriptor comprises the transport protocol, the transport protocol comprises a quick user datagram protocol (UDP) Internet connection (QUIC) protocol.

5. The method according to any one of claims 1 to 4, wherein the first QoS request message further comprises a request validity time and/or effective location information.

6. The method according to any one of claims 1 to 5, further comprising:
receiving a first response message for the first QoS request message, the first response message comprising first indication information, the first indication information being configured for indicating whether to agree to the first QoS request message.

7. The method according to claim 6, wherein
when the first indication information is configured for indicating agreeing to the first QoS request message, the first response message further comprises first transaction reference ID information, the first transaction reference ID information being configured for determining the first connection ID information in the first QoS request message.

8. The method according to claim 7, further comprising:
transmitting a second QoS request message for updating the service flow, the second QoS request message comprising second connection ID information and the first transaction reference ID information; and
the second QoS request message being configured for instructing the PCF to transmit, according to the second QoS request message, a second PCC rule to the first SMF, the second PCC rule comprising the second connection ID information, and the second PCC rule being obtained by updating the first PCC rule according to the second connection ID information and the first transaction reference ID information.

9. A message transmission method, performed by a policy control function (PCF), the method comprising:
acquiring a first quality of service (QoS) request message of a service flow, the first QoS request message comprising first connection identity (ID) information and a first QoS parameter;
determining a first protocol data unit (PDU) session and a first policy control and charging (PCC) rule according to the first QoS request message, the first PCC rule comprising the first connection ID information and the first QoS parameter; and
transmitting the first PCC rule to a first session management function (SMF) corresponding to the first PDU session,
the first PCC rule being configured for instructing the first SMF to transmit a first data packet detection rule and a corresponding first QoS execution rule to a user plane function (UPF), the first data packet detection rule comprising the first connection ID information.

10. A message transmission method, performed by a first session management function (SMF) corresponding to a first protocol data unit (PDU) session, the method comprising:
receiving a first policy control and charging (PCC) rule from a policy control function (PCF), the first PCC rule comprising first connection identity (ID) information and a first quality of service (QoS) parameter;
acquiring a first data packet detection rule and a corresponding first QoS execution rule according to the first PCC rule, the first data packet detection rule comprising the first connection ID information; and
transmitting the first data packet detection rule and the corresponding first QoS execution rule to a user plane function (UPF),
the first data packet detection rule being configured for instructing the UPF to acquire, according to the first data packet detection rule, a data packet of a service flow, and execute the first QoS execution rule on the data packet.

11. A message transmission method, performed by a user plane function (UPF), the method comprising:
receiving a first data packet detection rule and a corresponding first quality of service (QoS) execution rule from a first session management function (SMF) corresponding to a first protocol data unit (PDU) session, the first data packet detection rule comprising first connection identity (ID) information; and
acquiring a data packet of a service flow according to the first data packet detection rule, and executing the first QoS execution rule on the data packet, the data packet of the service flow comprising the first connection ID information.

12. A message transmission method, performed by an application function (AF), the method comprising:
transmitting a first route request message of a service flow, the first route request message comprising third connection identity (ID) information and a first routing rule; and
the first route request message being configured for instructing a policy control function (PCF) to transmit, according to the first route request message, a third policy control and charging (PCC) rule to a second session management function (SMF) corresponding to a second protocol data unit (PDU) session, the third PCC rule comprising the third connection ID information and the first routing rule.

13. The method according to claim 12, wherein the first route request message comprises a service flow template, the service flow template comprising the third connection ID information.

14. The method according to claim 13, wherein the service flow template further comprises at least one of the following: a source network address, a source port number, a destination network address, a destination port number, a fully qualified domain name (FQDN), or an application identity (APP ID).

15. The method according to any one of claims 12 to 14, wherein the first route request message further comprises a request validity time and/or effective location information.

16. The method according to any one of claims 12 to 15, further comprising:
receiving a third response message for the first route request message, the third response message comprising third indication information, the third indication information being configured for indicating whether to agree to the first route request message.

17. The method according to claim 16, wherein
when the third indication information is configured for indicating agreeing to the first route request message, the third response message further comprises second transaction reference ID information, the second transaction reference ID information being configured for determining the third connection ID information in the first route request message.

18. The method according to claim 17, further comprising:
transmitting a second route request message for updating the service flow, the second route request message comprising fourth connection ID information and the second transaction reference ID information; and
the second route request message being configured for instructing the PCF to transmit, according to the second route request message, a fourth PCC rule to the second SMF, the fourth PCC rule comprising the fourth connection ID information, and the fourth PCC rule being obtained by updating the third PCC rule according to the fourth connection ID information and the second transaction reference ID information.

19. A message transmission method, performed by a policy control function (PCF), the method comprising:
acquiring a first route request message of a service flow, the first route request message comprising third connection identity (ID) information and a first routing rule;
determining a second protocol data unit (PDU) session and a third policy control and charging (PCC) rule according to the first route request message, the third PCC rule comprising the third connection ID information and the first routing rule; and
transmitting the third PCC rule to a second session management function (SMF) corresponding to the second PDU session,
the third PCC rule being configured for instructing the second SMF to transmit a third data packet detection rule and a corresponding first offloading forwarding rule to a user plane function (UPF), the third data packet detection rule comprising the third connection ID information.

20. A message transmission method, performed by a second session management function (SMF) corresponding to a second protocol data unit (PDU) session, the method comprising:
receiving a third policy control and charging (PCC) rule from a policy control function (PCF), the third PCC rule comprising third connection identity (ID) information and a first routing rule;
acquiring a third data packet detection rule and a corresponding first offloading forwarding rule according to the third PCC rule, the third data packet detection rule comprising the third connection ID information; and
transmitting the third data packet detection rule and the corresponding first offloading forwarding rule to a user plane function (UPF),
the third data packet detection rule being configured for instructing the UPF to acquire, according to the third data packet detection rule, a data packet of a service flow, and execute the first offloading forwarding rule on the data packet.

21. A message transmission method, performed by a user plane function (UPF), the method comprising:
receiving a third data packet detection rule and a corresponding first offloading forwarding rule from a second session management function (SMF) corresponding to a second protocol data unit (PDU) session, the third data packet detection rule comprising third connection identity (ID) information; and
acquiring a data packet of a service flow according to the third data packet detection rule, and executing the first offloading forwarding rule on the data packet, the data packet of the service flow comprising the third connection ID information.

22. An application function (AF), comprising:
a transmission unit, configured to transmit a first quality of service (QoS) request message of a service flow, the first QoS request message comprising first connection identity (ID) information and a first QoS parameter; and
the first QoS request message being configured for instructing a policy control function (PCF) to transmit, according to the first QoS request message, a first policy control and charging (PCC) rule to a first session management function (SMF) corresponding to a first protocol data unit (PDU) session, the first PCC rule comprising the first connection ID information and the first QoS parameter.

23. A policy control function (PCF), comprising:
a receiving unit, configured to acquire a first quality of service (QoS) request message of a service flow, the first QoS request message comprising first connection identity (ID) information and a first QoS parameter;
a processing unit, configured to determine a first protocol data unit (PDU) session and a first policy control and charging (PCC) rule according to the first QoS request message, the first PCC rule comprising the first connection ID information and the first QoS parameter; and
a transmission unit, configured to transmit the first PCC rule to a first session management function (SMF) corresponding to the first PDU session,
the first PCC rule being configured for instructing the first SMF to transmit a first data packet detection rule and a corresponding first QoS execution rule to a user plane function (UPF), the first data packet detection rule comprising the first connection ID information.

24. A first session management function (SMF) corresponding to a first protocol data unit (PDU) session, comprising:
a receiving unit, configured to receive a first policy control and charging (PCC) rule from a policy control function (PCF), the first PCC rule comprising first connection identity (ID) information and a first quality of service (QoS) parameter;
a processing unit, configured to acquire a first data packet detection rule and a corresponding first QoS execution rule according to the first PCC rule, the first data packet detection rule comprising the first connection ID information; and
a transmission unit, configured to transmit the first data packet detection rule and the corresponding first QoS execution rule to a user plane function (UPF),
the first data packet detection rule being configured for instructing the UPF to acquire, according to the first data packet detection rule, a data packet of a service flow, and execute the first QoS execution rule on the data packet.

25. A user plane function (UPF), comprising:
a receiving unit, configured to receive a first data packet detection rule and a corresponding first quality of service (QoS) execution rule from a first session management function (SMF) corresponding to a first protocol data unit (PDU) session, the first data packet detection rule comprising first connection identity (ID) information; and
a processing unit, configured to acquire a data packet of a service flow according to the first data packet detection rule, and execute the first QoS execution rule on the data packet, the data packet of the service flow comprising the first connection ID information.

26. An application function (AF), comprising:
a transmission unit, configured to transmit a first route request message of a service flow, the first route request message comprising third connection identity (ID) information and a first routing rule; and
the first route request message being configured for instructing a policy control function (PCF) to transmit, according to the first route request message, a third policy control and charging (PCC) rule to a second session management function (SMF) corresponding to a second protocol data unit (PDU) session, the third PCC rule comprising the third connection ID information and the first routing rule.

27. A policy control function (PCF), comprising:
a receiving unit, configured to acquire a first route request message of a service flow, the first route request message comprising third connection identity (ID) information and a first routing rule;
a processing unit, configured to determine a second protocol data unit (PDU) session and a third policy control and charging (PCC) rule according to the first route request message, the third PCC rule comprising the third connection ID information and the first routing rule; and
a transmission unit, configured to transmit the third PCC rule to a second session management function (SMF) corresponding to the second PDU session,
the third PCC rule being configured for instructing the second SMF to transmit a third data packet detection rule and a corresponding first offloading forwarding rule to a user plane function (UPF), the third data packet detection rule comprising the third connection ID information.

28. A second session management function (SMF) corresponding to a second protocol data unit (PDU) session, comprising:
a receiving unit, configured to receive a third policy control and charging (PCC) rule from a policy control function (PCF), the third PCC rule comprising third connection identity (ID) information and a first routing rule;
a processing unit, configured to acquire a third data packet detection rule and a corresponding first offloading forwarding rule according to the third PCC rule, the third data packet detection rule comprising the third connection ID information; and
a transmission unit, configured to transmit the third data packet detection rule and the corresponding first offloading forwarding rule to a user plane function (UPF),
the third data packet detection rule being configured for instructing the UPF to acquire, according to the third data packet detection rule, a data packet of a service flow, and execute the first offloading forwarding rule on the data packet.

29. A user plane function (UPF), comprising:
a receiving unit, configured to receive a third data packet detection rule and a corresponding first offloading forwarding rule from a second session management function (SMF) corresponding to a second protocol data unit (PDU) session, the third data packet detection rule comprising third connection identity (ID) information; and
a processing unit, configured to acquire a data packet of a service flow according to the third data packet detection rule, and execute the first offloading forwarding rule on the data packet, the data packet of the service flow comprising the third connection ID information.

30. A communication device, comprising:
one or more processors; and
a memory, configured to store one or more programs, the one or more programs, when executed by the one or more processors, causing the communication device to implement the method according to any one of claims 1 to 21.

31. A computer-readable storage medium, having a computer program stored therein, the computer program, when run on a computer, causing the computer to perform the method according to any one of claims 1 to 21.

32. A computer program product, comprising a computer program, the computer program, when executed by a computer, implementing the method according to any one of claims 1 to 21.
